(19) Europäisches Patentamt
European Patent Office
Office européen des brevets

(11) **EP 4 478 602 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **24160385.1**

(22) Anmeldetag: **28.02.2024**

(51) Internationale Patentklassifikation (IPC):
**H02P 21/00** (2016.01)    **H02P 21/34** (2016.01)

(52) Gemeinsame Patentklassifikation (CPC):
**H02P 21/34; H02P 21/0021**

(54) **VERFAHREN ZUM POSITIONSGEBERLOSEN STARTEN EINER PERMANENTERREGTEN SYNCHRONMASCHINE**

METHOD FOR STARTING A PERMANENTLY EXCITED SYNCHRONOUS MACHINE WITHOUT A POSITION SENSOR

PROCÉDÉ DE DÉMARRAGE SANS CAPTEUR DE POSITION D'UNE MACHINE SYNCHRONE À EXCITATION PERMANENTE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **13.06.2023 LU 504502**

(43) Veröffentlichungstag der Anmeldung:
**18.12.2024 Patentblatt 2024/51**

(73) Patentinhaber: **WILO SE**
**44263 Dortmund (DE)**

(72) Erfinder:
• **Fiedler, Jens Olav**
**44263 Dortmund (DE)**
• **Habermann, Thomas**
**44263 Dortmund (DE)**
• **Müller, Christian Jakob**
**44263 Dortmund (DE)**

(74) Vertreter: **Cohausz Hannig Borkowski Wißgott Patentanwaltskanzlei GbR**
**Grafenberger Allee 337a**
**40235 Düsseldorf (DE)**

(56) Entgegenhaltungen:
**EP-A1- 2 034 605        EP-A1- 3 920 402**
**DE-T5- 112020 006 578**

• **BOLDEA ION ET AL: "Scalar V/f and I-f control of AC motor drives: An overview", 2015 INTL AEGEAN CONFERENCE ON ELECTRICAL MACHINES & POWER ELECTRONICS (ACEMP), 2015 INTL CONFERENCE ON OPTIMIZATION OF ELECTRICAL & ELECTRONIC EQUIPMENT (OPTIM) & 2015 INTL SYMPOSIUM ON ADVANCED ELECTROMECHANICAL MOTION SYSTEMS (ELECTROMOTION), IEEE, 2 September 2015 (2015-09-02), pages 8 - 17, XP032877682, DOI: 10.1109/OPTIM.2015.7426739**

**Beschreibung**

Die Erfindung betrifft ein Verfahren zum positionsgeberlosen, drehzahlungeregelten Starten einer von einem Frequenzumrichter mit einem Spannungszwischenkreis gespeisten Synchronmaschine mit einem permanentmagnetischen Rotor und einem Stator, bei dem für einen gesteuerten Hochlauf der Synchronmaschine eine vektorielle Stromregelung mit wenigstens einem ersten, eine erste Stromkomponente des Statorstroms einstellenden Regler einen gemäß einem vorgegebenen, ansteigenden Drehzahlverlauf rotierenden Referenzstromraumzeiger des Statorstroms einstellt, der einen zumindest durch einen Sollwert des ersten Stromreglers vorgegebenen Betrag und eine definierte Winkellage in einem mit dem Referenzstromraumzeiger relativ zu einem ortsfesten Bezugsystem des Stators rotierenden Koordinatensystem besitzt.

Für die Regelung von permanentmagnetischen Synchronmaschinen (PMSM) wird häufig die feldorientierte Regelung (FOR) eingesetzt. Mit dieser Methode kann das Drehmoment der PMSM sehr genau geregelt werden kann. Für diese Regelung ist allerdings die Kenntnis der Rotorlage, d.h. die Winkelstellung des Rotors bezogen auf den Stator notwendig, siehe hierzu EP2591993 A1.

Die Rotorlage kann durch einen Lagegeber oder durch sogenannte geberlose Verfahren bestimmt werden. Da Lagegeber die Kosten eines Systems erhöhen, werden in vielen Anwendungen geberlose Verfahren eingesetzt, die die vom Rotormagnetfeld in die Statorspulen rückinduzierte Spannung, die sogenannte Back-EMF (Electromagnetic Force) auswerten. Back-EMF basierte Verfahren sind weit verbreitet und lassen sich relativ einfach und kostengünstig implementieren. Sie funktionieren allerdings nur oberhalb einer bestimmten Mindestdrehzahl, da sie auf der Beobachtung der induzierten Spannung basieren, welche proportional zur Drehzahl ist. Für geringere Drehzahlen gibt es z.B. Verfahren mit eingeprägten Trägersignalen, die Asymmetrien im Rotor detektieren und so die Rotorlage bestimmen sollen. Diese Verfahren sind deutlich aufwendiger in der Umsetzung und nicht für alle PMSM geeignet. Die Rotorlage kann also beim Hochlauf der Synchronmaschine nur schwer ermittelt werden und ist deshalb in vielen Fällen nicht bekannt.

Für Synchronmaschinen als Antriebe für Lasten mit Lastkennlinien, die nur ein geringes Drehmoment bei geringen Drehzahlen erfordern und die auch nur selten bei geringen Drehzahlen betrieben werden, wie es bei Lüftern und Kreiselpumpen der Fall ist, werden daher häufig rein gesteuerte Verfahren für den Hochlauf eingesetzt. Mit anderen Worten erfolgt die Ansteuerung der Synchronmaschine beim Hochlauf regelungstechnisch nicht in einem geschlossenen, sondern in einem offenen Regelkreis. Das bedeutet, dass der Hochlauf nicht unter Verwendung der auf einen Reglereingang eines Drehzahlreglers rückgekoppelten Istposition und/ oder Istdrehzahl des Rotors erfolgt. Vielmehr wird eine Sollposition bzw. Winkellage des Rotors schlichtweg vorgegeben. Der Bereich geringer Drehzahl wird auf diese Weise rein gesteuert durchlaufen, bevor ab einer definierten Zieldrehzahl in den feldorientiert geregelten Bereich gewechselt wird, d.h. die feldorientierte Regelung angewendet wird. Die Vorgabe der Sollposition bzw. Winkellage des Rotors erfolgt in der Regel unter Verwendung eines Strom- oder Spannungsraumzeigers nach einer definierten Trajektorie, beispielsweise so, dass ein konstanter Strom für eine konstante Beschleunigung eingestellt wird, so dass der Rotor die vorgegebene, der Trajektorie entsprechende Sollposition bzw. Winkellage einnimmt.

Problematisch beim rein gesteuerten Hochlauf ist, dass das Drehmoment nicht geregelt werden kann. Es ergibt sich aus der Anfangsposition, der Frequenzvorgabe und der Lastcharakteristik der anzutreibenden Last. Genauer gesagt, ergibt sich das Drehmoment M aus dem Winkel $\vartheta$ zwischen dem Stromraumzeiger I und dem verketteten magnetischen Fluss $\psi$, nachfolgend auch magnetische Flussverkettung genannt, und dem Betrag is des Stromraumzeigers, d.h. der Höhe des Statorstroms is, wie nachfolgende Drehmomentgleichung Gl. 1 ausdrückt

$$\text{Gl. 1:} \qquad M = 3/2\, p \,\cdot \Psi \cdot\ is \cdot \sin(\vartheta),$$

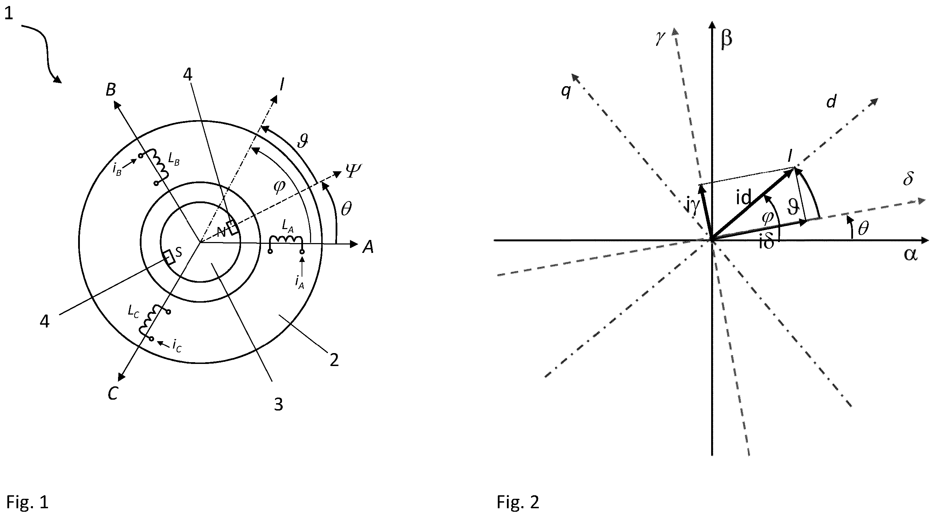

in der p die Polpaarzahl des Rotors ist, und Figur 1 veranschaulicht. Figur 1 zeigt im Querschnitt den Stator 2 mit drei räumlich um 120° versetzten Statorwicklungen, denen jeweils eine der um 120° zueinander versetzten Achsen A, B und C zugeordnet ist, und den permanentmagnetischen Rotor 3 einer Synchronmaschine 1. Der Rotor 3 hat hier zwei Permanentmagnete 4 (p=1), die einen Nordpol (N) und einen Südpol (S) ausbilden. Der Raumzeiger der magnetischen Flussverkettung $\psi$ des Rotors 3 liegt per Definition auf der Nord-Süd Achse der Magnete 4, so dass die Flussverkettung $\psi$ auch dem Rotorfeld gleichgesetzt werden kann. Das Rotorfeld/ Flussverkettung $\psi$ hat bezogen auf den Stator 2, bzw. auf ein in den Stator 2 gelegtes, kartesisches $\alpha\beta$-Koordinatensystem (Statorbezugssystem) mit den statorfesten Koordinatenachse $\alpha$ und $\beta$, eine Winkelposition $\theta$, die der Rotorlage bezogen auf den Stator 2 entspricht. In Figur 1 ist ein Stromraumzeiger I des Statorstroms beispielhaft eingezeichnet, der den Winkel $\vartheta$ zum Raumzeiger des Rotorfeldes/ der Flussverkettung $\psi$ und den Winkel $\varphi$ im $\alpha\beta$-Koordinatensystem besitzt. Das $\alpha\beta$-Koordinatensystem mit den ortsfesten Koordinatenachsen $\alpha$ und $\beta$ ist aus Gründen der Übersichtlichkeit separat in Figur 2 dargestellt, wobei die Koordinatenachse $\alpha$ in Figur 2 der ortsfesten, räumlichen Achse A in Figur 1 entspricht.

Figur 2 zeigt außerdem ein kartesisches dq-Koordinatensystem, das für die feldorientierte Regelung benutzt wird und mit dem geschätzten bzw. gesteuerten Rotorwinkel rotiert und ein $\delta\gamma$-Koordinatensystem, das die tatsächliche Winkellage des Rotors in Bezug auf das $\alpha\beta$-Koordinatensystem angibt. Die Koordinatenachsen d, q sind strichpunktiert dargestellt. Die $\delta$-Achse zeigt dabei per Definition in Richtung der magnetischen Flussverkettung $\psi$. Bei genauer Kenntnis der Rotorposition/ Winkellage des Rotors liegen beide Koordinatensysteme dq, und $\delta\gamma$ exakt übereinander.

Ein in den Stator 2 eingeprägter Strom bzw. der dazu im $\alpha\beta$-Koordinatensystem darstellbare Stromraumzeiger I kann durch Projektion auf die Koordinatenachsen d und q in eine erste Stromkomponente id und eine zweite Stromkomponente iq zerlegt werden. Mathematisch erfolgt dies mittels der sogenannten Park-Transformation. Grafisch betrachtet, liegt dabei die erste Stromkomponente id auf der d-Achse, die zweite Stromkomponente iq auf der q-Achse wobei sich der Stromraumzeiger I durch vektorielle Addition der ersten und zweiten Stromkomponente id, iq ergibt. Die beiden Stromkomponenten id, iq werden im allgemeinen Sprachgebrauch auch d-Strom und q-Strom genannt. Bei Kenntnis der Rotorlage ist der q-Strom iq die das Drehmoment erzeugende Stromkomponente, während der d-Strom id den magnetischen Fluss erzeugt. Die beiden Stromkomponenten id, iq sind orthogonal und können somit unabhängig voneinander geregelt werden.

Bei der hier gewählten Darstellung wird das tatsächliche Drehmoment durch den i$\gamma$ Strom gebildet. Die Stromkomponenten id, iq können durch eine Drehung um den Winkel $\vartheta$ in die Stromkomponenten i$\delta$, i$\gamma$ überführt werden.

Wird der Statorstrom I so eingeprägt, dass er im dq-Koordinatensystem nur eine Komponente auf der d-Achse besitzt, wie dies in Figur 2 der Fall ist, also als ein reiner d-Strom, so wird auf den Rotor 3 kein Drehmoment ausgeübt, wenn das dq Koordinatensystem mit dem $\delta\gamma$-Koordinatensystem übereinstimmt (Betrachtung im Stillstand). Der Rotor 3 verbleibt somit in seiner bestehenden Winkellage. Anders ist es jedoch, wenn die tatsächliche Winkellage des Rotors 3 von der Winkellage bzw. Richtung des eingeprägten Stromraumzeigers abweicht. In diesem Fall dreht sich der Rotor so lange, bis die Koordinatensysteme (dq und $\delta\gamma$) übereinstimmen.

Angenommen, dass der Rotor 3, wie in Figur 2, in einem Winkel $\vartheta$ zur d-Achse liegt, so besteht ein drehmomentbildender Strom i$\gamma$ > 0 und der Rotor 3 wird sich so ausrichten, dass die $\delta$-Achse mit der d-Achse übereinstimmt. Anders ausgedrückt, dreht sich das $\delta\gamma$-Koordinatensystem auf das dq-Koordinatensystem, so dass sie sich im Endzustand decken. Somit beschreibt in diesem Fall das $\delta\gamma$-Koordinatensystem die unbekannte Ist-Position bzw. Ist-Winkellage des Rotors, während das dq-Koordinatensystem eine Soll-Position bzw. Soll-Winkellage beschreibt. In diesem Endzustand ist die Projektion des d -Stroms auf die $\gamma$-achse gleich null, so dass kein Drehmoment M mehr auf den Rotor 3 wirkt. Es gilt dann: i$\delta$ = id und i$\gamma$ = iq = 0. Somit ergibt sich in der Drehmomentgleichung für das Drehmoment M gemäß Gl.1:

$$\text{Gl. 2:} \qquad M = 3/2\, p\, \cdot \Psi \cdot\, i_d \cdot \sin\left(\vartheta\right),$$

Wie bereits erwähnt, erfolgt der Hochlauf von geberlosen Synchronmaschinen mit permanentmagnetischem Rotor (PMSM) häufig rein gesteuert, indem wiederholt ein Stromraumzeiger mit einem vorgegebenen Winkel eingestellt wird. Der Winkel des jeweils eingestellten Stromraumzeigers nimmt zu und zwar mit der Zeit zunehmend schneller. Dies kann als "Open Loop Phase" bezeichnet werden.

Es sei hier noch einmal erwähnt, dass in dieser Open Loop Phase das Drehmoment des Antriebs lediglich gesteuert, d.h. nicht geregelt wird, da die tatsächliche Rotorposition nicht bekannt ist. Aus diesem Grund kann es beim Hochlauf vorkommen, dass der Rotor 3 schneller dreht, als der Stromraumzeiger weitergeschaltet wird. Das bedeutet, dass der Rotor 3 gegenüber dem eingestellten Stromraumzeiger bzw. dem Statorfeld kurzzeitig voreilt, d.h. den Stromraumzeiger bzw. das Statorfeld überholt. Dies hat zur Folge, dass das Drehmoment negativ wird der Rotor 3 in Richtung des eingestellten Stromraumzeigers zurückgezogen wird. Der Rotor 3 wird abgebremst und Energie wird in den Zwischenkreis zurückgespeist. Dadurch steigt die Zwischenkreisspannung an. Dies kann zu einem Überstrom und/ oder einer Überspannung im Zwischenkreis führen und im schlimmsten Fall den Zwischenkreis zerstören, wenn dieser keine ausreichende Zwischenkreiskapazität besitzt, was bei einem sogenannten "schlanken" Zwischenkreis der Fall ist, d.h. bei einem Zwischenkreis mit geringer Kapazität. In der Regel wird dann zum Schutz des Frequenzumrichters eine Notabschaltung veranlasst. Es versteht sich von selbst, dass dieser Fall in der Praxis vermieden werden muss. Dies ist möglich, indem eine ausreichend große Zwischenkreiskapazität im Frequenzumrichter der Synchronmaschine verwendet wird. Eine große Zwischenkreiskapazität bedingt jedoch ein entsprechend großes Bauvolumen, führt zu höheren Kosten und zu einem höheren Gewicht des Frequenzumrichters.

Es ist deshalb gemäß einem ersten Aspekt Aufgabe der vorliegenden Erfindung, den gesteuerten Hochlauf einer Synchronmaschine mit permanentmagnetischem Rotor, respektive die "Open Loop Phase" dahingehend zu optimieren, dass ein negatives Drehmoment während des Hochlaufs vermieden wird und somit eine geringe oder minimale Zwischenkreiskapazität im Frequenzumrichter verwendet werden kann.

Diese Aufgabe wird durch das Verfahren nach Anspruch 1 gelöst. Vorteilhafte Weiterbildungen sind in den Unteransprüchen angegeben und werden nachfolgend erläutert.

Erfindungsgemäß wird ein Verfahren zum positionsgeberlosen, drehzahlungeregelten Starten einer von einem Frequenzumrichter mit einem Spannungszwischenkreis gespeisten Synchronmaschine mit einem permanentmagnetischen Rotor und einem Stator vorgeschlagen, bei dem für einen gesteuerten Hochlauf der Synchronmaschine eine vektorielle Stromregelung mittels wenigstens einem ersten, eine erste Stromkomponente des Statorstroms einstellenden Regler einen gemäß einem vorgegebenen, ansteigenden Drehzahlverlauf rotierenden Referenzstromraumzeiger des Statorstroms einstellt, der einen zumindest durch einen Sollwert des ersten Stromreglers vorgegebenen Betrag und eine definierte Winkellage in einem mit dem Referenzstromraumzeiger relativ zu einem ortsfesten Bezugsystem des Stators rotierenden Koordinatensystem besitzt. Das ortsfeste Bezugsystem des Stators entspricht dem zuvor in der Einleitung genannten $\alpha\beta$-Koordinatensystem. Bei dem Verfahren wird die Zwischenkreisspannung des Spannungszwischenkreises während des Hochlaufs ermittelt. Die Zwischenkreisspannung, oder eine davon abgeleitete Größe, wird dann mit einem Referenzwert, insbesondere einem Grenzwert verglichen, und es wird ein Drehzahlkorrekturwert zu dem Drehzahlverlauf hinzuaddiert, wenn die Zwischenkreisspannung den Referenzwert übersteigt.

Durch die Addition des Drehzahlkorrekturwerts wird erreicht, dass der Stromraumzeiger respektive das Statorfeld stärker beschleunigt wird oder, im $\alpha\beta$-Koordinatensystem betrachtet, vorgedreht wird, um den mechanisch voreilenden Rotor einzuholen. Somit wird ein etwaiges negatives Moment minimiert oder sogar überkompensiert, so dass wieder ein positives Moment wirkt. Der Kern der Erfindung besteht somit darin, den vorgegebenen Drehzahlverlauf in Abhängigkeit der Zwischenkreisspannung dynamisch anzupassen. Für den Hochlauf ist der Drehzahlverlauf eine monoton steigende Funktion, deren Steigung, zumindest temporär, durch den Drehzahlkorrekturwert gegenüber dem ursprünglich vorgegebenen Verlauf erhöht wird. Diese Anpassung des Drehzahlverlaufs kann auch als Kompensationsregelung oder im Hinblick auf den damit erreichten Zweck als Stromwinkelregelung oder Zwischenkreisspannungsregelung bezeichnet werden.

Ganz vermieden werden kann ein negatives Moment nicht, weil erst dessen Vorliegen die erfindungsgemäße Kompensationsreaktion zur Verhinderung einer Überladung des Zwischenkreises bewirkt. Das negative Moment wird anhand einer Rückspeisung von Energie in den Spannungszwischenkreis, mithin an einer steigenden Zwischenkreisspannung erkannt. Der Drehzahlkorrekturwert kann zu dem Drehzahlverlauf hinzuaddiert werden, wenn die Zwischenkreisspannung den Referenzwert übersteigt.

Als Referenzwert kann beispielsweise der Wert der Zwischenkreisspannung vor dem Start des Hochlaufs oder ein 1-10% darüber liegender Wert verwendet werden.

Alternativ kann der Drehzahlkorrekturwert hinzuaddiert werden, wenn die Zwischenkreisspannung ansteigt. So kann die von der Zwischenkreisspannung abgeleitete Größe die zeitliche Ableitung der Zwischenkreisspannung sein, die bei einem Anstieg der Zwischenkreisspannung positiv ist. Der Referenzwert kann in diesem Fall 0 V/ms oder ein geringfügig positiver Wert sein, beispielsweise 1 V/ms oder 10 V/ms.

In einer Ausführungsvariante kann vorgesehen sein, dass die beiden vorgenannten Kriterien kumulativ erfüllt sind. In diesem Fall erfolgt wie zuvor eine erste Abfrage, ob die Zwischenkreisspannung den Referenzwert übersteigt. Der Drehzahlkorrekturwert wird aber nur dann hinzuaddiert, wenn gleichzeitig die Zwischenkreisspannung steigt oder in einem bestimmten Maß steigt. In diesem Fall erfolgt zusätzlich eine zweite Abfrage, nämlich beispielsweise ob die zeitliche Ableitung der Zwischenkreisspannung positiv ist.

Gemäß einer vorteilhaften Weiterbildung kann vorgesehen sein, dass der Drehzahlkorrekturwert umso größer ist, bzw. umso größer festgelegt wird, je höher die Abweichung der Zwischenkreisspannung vom Referenzwert ist. Dies entspricht einer Proportionalregelung, respektive einer Regelung mit P-Anteil. Die Abweichung wird in diesem Fall zunächst rechnerisch ermittelt. Anschließend wird die Höhe des Drehzahlkorrekturwerts in Abhängigkeit der Höhe der ermittelten Abweichung festgelegt, beispielsweise indem der Drehzahlkorrekturwert mit der Abweichung oder einem davon abgeleiteten ersten Korrekturfaktor multipliziert wird, und dieser so festgelegte Drehzahlkorrekturwert dem Drehzahlverlauf hinzuaddiert wird.

Alternativ oder kumulativ kann vorgesehen sein, dass die Abweichung der Zwischenkreisspannung vom Referenzwert ermittelt wird und der Drehzahlkorrekturwert umso größer ist, bzw. umso größer festgelegt wird, je länger die Abweichung besteht. Dies entspricht einer Integralregelung, respektive einer Regelung mit I-Anteil. Die ermittelte Abweichung wird in diesem Fall über der Zeit integriert. Anschließend wird die Höhe des Drehzahlkorrekturwerts in Abhängigkeit der Höhe des durch die Integration erhaltenen Integralwerts festgelegt, beispielsweise indem der Drehzahlkorrekturwert mit dem Integralwert oder einem davon abgeleiteten zweiten Korrekturfaktor multipliziert wird, und dieser so festgelegte Drehzahlkorrekturwert dem Drehzahlverlauf hinzuaddiert wird. Ist die Abweichung bereits im Rahmen der genannten Proportionalregelung ermittelt worden, muss sie natürlich für die Integralregelung nicht noch einmal ermittelt werden.

Weiter alternativ oder kumulativ kann vorgesehen sein, dass der Drehzahlkorrekturwert umso größer ist, bzw. umso größer festgelegt wird, je schneller die Zwischenkreisspannung oder die Abweichung steigt. Dies entspricht einer Differentialregelung, respektive einer Regelung mit D-Anteil. Die Zwischenkreisspannung oder die Abweichung wird in diesem Fall differenziert. Anschließend wird die Höhe des Drehzahlkorrekturwerts in Abhängigkeit der Höhe des durch die Differenzierung erhaltenen Differentialwerts festgelegt, beispielsweise indem der Drehzahlkorrekturwert mit dem Differentialwert oder einem davon abgeleiteten dritten Korrekturfaktor multipliziert wird, und dieser so festgelegte Drehzahlkorrekturwert dem Drehzahlverlauf hinzuaddiert wird. Ist die Abweichung im Rahmen der Proportional- oder Integralregelung bereits ermittelt worden, muss sie natürlich für die Differentialregelung nicht erneut ermittelt werden. Anderenfalls wird die Abweichung der Zwischenkreisspannung vom Referenzwert, zunächst ermittelt.

Von besonderem Vorteil ist es, wenn vor dem Hochlauf eine Ausrichtung des Rotors auf eine Zielposition erfolgt, indem die vektorielle Stromregelung wenigstens mit dem ersten Stromregler zumindest einen stationären Referenzstromraumzeiger mit einer definierten Winkellage als Startposition für den Hochlauf bezogen auf das ortsfeste Bezugssystem einstellt. Mit anderen Worten wird der Rotor in der Zielposition geparkt, so dass dessen Winkellage zu Beginn des Hochlaufs bekannt ist. Diese Ausrichtung des Rotors auf eine Zielposition kann unabhängig von der erfindungsgemäßen Anpassung des Drehzahlverlaufs durch den Drehzahlkorrekturwert erfolgen.

Für das Ausrichten kann ein oder können auch mehrere Stromraumzeiger für eine gewisse Zeit eingestellt werden. Bei mehreren Stromraumzeigern bestimmt der zuletzt eingestellte Stromraumzeiger die Zielposition des Rotors. Der Rotor richtet sich dann stets in Richtung des stationären Stromraumzeigers, respektive des Statorfeldes aus, da der Stromraumzeiger die Richtung des Statorfeldes im $\alpha\beta$-Koordinatensystem definiert. Vorzugsweise werden zumindest zwei verschiedene Stromraumzeiger eingestellt, da es neben der gewünschten stabilen Gleichgewichtslage (dq-Koordinatensystem und $\delta, \gamma$-Koordinatensystem deckungsgleich) auch immer eine um 180° versetzte labile Gleichgewichtslage gibt (dq-Koordinatensystem und $\delta, \gamma$-Koordinatensystem um 180° zueinander versetzt, d.h. der eingeprägte d -Strom liegt ungünstigerweise zufällig entgegen der $\delta$-Achse), so dass die Maschine kein Drehmoment erzeugt. Der Rotor würde sich dann, wenn er zufällig vor dem Start in dieser Position steht, nicht ausrichten.

Bei dieser Ausrichtungsprozedur wird deutlich, dass der Rotor je nach seiner Ausgangslage eine mehr oder weniger große Bewegung ausführt, die in Richtung der später vorgesehenen Drehrichtung, hier als positive Drehzahl definiert, oder entgegen dieser verlaufen kann, hier als negative Drehzahl definiert. Die maximale Bewegung entspricht dabei einer halben elektrischen Periode, also einem mechanischen Winkel von $\pi/p$ (p=Polpaarzahl). Mit anderen Worten ist bei einer Polpaarzahl von p = 1 (zwei Magnete) eine Maximalbewegung von $\pi/p$ = 180° möglich.

Wird in der Lage $\varphi$=0 ausgerichtet, gilt bei einer Winkelbewegung des Rotors 3 von einer Initialposition $\theta_1$ zu einer Zielposition $\theta_2$ für die kinetische Energie E:

$$\text{Gl. 3:} \qquad E = \int_{\theta_1}^{\theta_2} \frac{3}{2} p \cdot \Psi \cdot is(\theta) \cdot \sin(\theta) \, d\theta$$

d.h. im ungünstigen Fall bei einer Initialposition von $\theta_1 = \pi/p$

$$\text{Gl. 4:} \qquad E = \int_{\frac{\pi}{p}}^{0} \frac{3}{2} p \cdot \Psi \cdot is(\theta) \cdot \sin(\theta) \, d\theta$$

Die durch die Winkelbewegung aufgebaute kinetische Energie E hängt folglich von der Winkeldifferenz $\theta_2 - \theta_1$ zwischen Initialposition $\theta_1$ und Zielposition $\theta_2$, sowie vom Motorstrom is und der magnetischen Flussverkettung $\psi$ ab.

Es wird solange kinetische Energie aufgebaut, bis die ausgerichtete Position erreicht ist. Um zum Stillstand zu kommen, muss diese nun durch Reibung bzw. durch das vom Motor erzeugte, umgekehrte Drehmoment wieder abgebaut werden. Wie in dem Fall, dass der Rotor das Statorfeld in der Open Loop Phase überholt, besteht auch hier ein Problem, wenn der Zwischenkreis nicht in der Lage ist, diese Energie aufzunehmen, was bei einem sogenannten "schlanken" Zwischenkreis der Fall sein kann, d.h. bei einem Zwischenkreis mit vergleichsweise geringer Kapazität.

Es ist des Weiteren zu berücksichtigen, dass die Zielposition des Rotors 3 nicht abrupt eingenommen wird. Vielmehr schießt der Rotor über diese Zielposition hinaus, schwingt zurück und pendelt sich in der Zielposition ein. Dieses Einschwingverhalten kann mit der Schwingung eines Feder-Masse System verglichen werden, wobei das Rotationsträgheitsmoment des Rotors der Masse und das magnetische Moment der Federkraft entspricht. Die Rotorposition folgt somit einer gedämpften Schwingung, die langsam abklingt. Dabei wirken die mechanische Reibung in den Lagern des Rotors sowie die elektrischen Verluste im Stator (ohmsche Verluste und Ummagnetisierungsverluste) dämpfend. Betrachtet man als Last der Synchronmaschine eine Pumpe, so ist außerdem die Reibung der Flüssigkeit im Laufrad eine Dämpfungsgröße. Da aber die hydraulischen Kräfte bei geringen Drehzahlen relativ gering sind, kann sich je nach Trägheitsmoment der rotierenden Masse, d.h. des Rotors, eine nur geringe Dämpfung ergeben. Daraus ergibt sich die Gefahr, dass das System trotz vorhandener Dämpfung stark überschwingt. Überschüssige kinetische Energie, die sich durch das Überschwingen aufbaut, muss wieder abgebaut werden. Im Extremfall muss so die gesamte kinetische Energie E wieder in den Zwischenkreis zurückgespeist werden. Die kann zu einem Überstrom und/ oder einer Überspannung im Zwischenkreis führen und im schlimmsten Fall den Zwischenkreis zerstören, wenn dieser keine ausreichende Zwischenkreiskapazität besitzt. In der Regel wird dann zum Schutz des Frequenzumrichters eine Notabschaltung veranlasst.

Es ist deshalb gemäß einem zweiten Aspekt Aufgabe der vorliegenden Erfindung, den Anfahrvorgang einer permanentmagnetischen Synchronmaschine (PMSM), insbesondere die Ausrichtung des Rotors auf eine Zielposition für einen anschließenden definierten Hochlauf so zu gestalten, dass etwaige Einschwingvorgänge minimiert werden und soweit sie Auftreten, dadurch bedingte Überströme oder Überspannungen im Zwischenkreis vermieden werden, wobei gleichzeitig das maximal einstellbare Moment zur Beschleunigung des Rotors verfügbar sein soll.

Diese Aufgabe wird durch ein Verfahren zum positionsgeberlosen Starten einer von einem Frequenzumrichter mit einem Spannungszwischenkreis gespeisten Synchronmaschine mit einem permanentmagnetischen Rotor und einem Stator gelöst, bei dem zur Ausrichtung des Rotors auf eine Zielposition für einen anschließenden Hochlauf der Synchronmaschine eine vektorielle Stromregelung mit wenigstens einem ersten, eine erste Stromkomponente des Statorstroms einstellenden Stromregler zumindest einen stationären Referenzstromraumzeiger einstellt, der einen zumindest durch einen Sollwert des ersten Stromreglers vorgegebenen Betrag und eine definierte Winkellage in einem mit dem Referenzstromraumzeiger relativ zu einem ortsfesten Bezugsystem des Stators rotierenden Koordinatensystem besitzt, wobei bei der Einstellung des stationären Referenzstromraumzeigers der Istwert der von dem ersten Stromregler eingestellten ersten Stromkomponente des Statorstroms ermittelt und mit dem Sollwert des ersten Stromreglers verglichen wird, und für den ersten Stromregler ein erster Satz von Reglerparametern verwendet wird, wenn der Istwert über dem Sollwert liegt, und ein zweiter Satz von Reglerparametern verwendet wird, wenn der Istwert unter dem Sollwert liegt, wobei der erste Satz von Reglerparametern den Stromregler derart parametriert, dass er schneller regelt, als in dem Fall, dass er mit dem zweiten Satz von Reglerparametern parametriert ist.

Der Kern dieses zweiten Aspekts des erfindungsgemäßen Verfahrens besteht somit darin, unterschiedliche Reglerparameter für den Stromregler zu verwenden, je nachdem, ob der Sollwert über- oder unterschritten wird. Dies bewirkt ein dynamisches Verhalten des Stromreglers beim Ausrichten des Rotors in Abhängigkeit seiner tatsächlichen Position, so dass ein Überschwingen über die Zielposition hinaus und dadurch bedingte Überströme und Überspannungen im Zwischenkreis minimiert oder gar vermieden werden. Denn es zeigt sich, dass die Stromregelung ebenfalls einen Einfluss auf die Dämpfung des Systems ausübt. So erkennt man anhand von Gleichung Gl. 4, dass der Verlauf von $is(\theta)$ auch in die Energie eingeht. D.h., dass wenn der Stromregler ein "schlechtes" oder "weiches" Störverhalten hat, wird weniger Energie eingetragen. Mit anderen Worten wirkt die induzierte Spannung der Ursache bzw. Bewegung entgegen. Gleichzeitig kann der Sollwert zu jedem Zeitpunkt dem maximal möglichen einstellbaren Strom entsprechen, damit das maximal mögliche Drehmoment, je nach Initialposition des Rotors, abgerufen werden kann.

Der erste Satz von Reglerparametern führt aufgrund der geringeren Zeitkonstante zu einer steifen Parametrierung bzw. einem steifen Reglerverhalten, während der zweite Satz von Reglerparametern aufgrund der größeren Zeitkonstante zu einer weichen Parametrierung bzw. einem weichen Reglerverhalten führt. Da der Sollwert nicht stark überschritten werden soll, wird für den Fall, dass der Istwert über dem Sollwert liegt, die steife Parametrierung, d.h. der erste Satz von Reglerparametern verwendet. Wenn der Sollwert unter dem Sollwert liegt, wird die weiche Parametrierung, d.h. der zweite Satz von Reglerparametern verwendet, damit die rückinduzierte Spannung (Back-EMF) der Beschleunigung des Antriebs entgegenwirken und diese begrenzen kann.

Untersuchungen haben gezeigt, dass der zeitliche Verlauf der Ströme außer von der Initialposition $\theta_1$ stark von den Parametern der Stromregelung abhängt. Wenn eine steife Reglerparametrierung des Stromreglers gewählt wird, ist der Stromvektor im virtuellen rotorbezogenen $\delta, \gamma$- Koordinatensystem nahezu konstant. Nachteilig ist dabei, dass viel kinetische Energie in das System eingetragen wird und das elektromechanische System wenig Dämpfung besitzt. Es kommt daher zu einer ausgeprägten mechanischen Schwingung und die dabei umgewandelte kinetische Energie muss im Zwischenkreis zwischengespeichert werden, was bei geringen Kapazitäten im Zwischenkries zu hohen Spannungen führen kann.

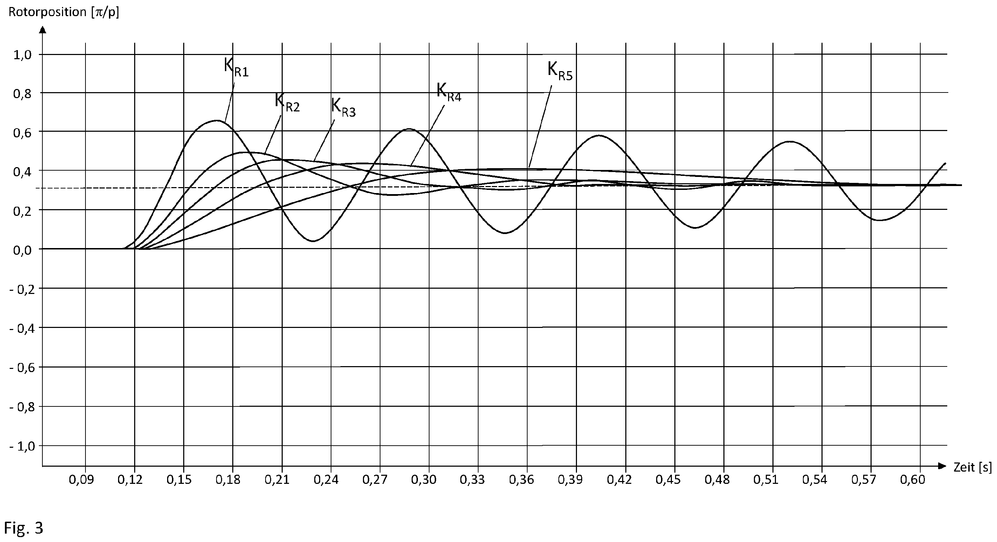

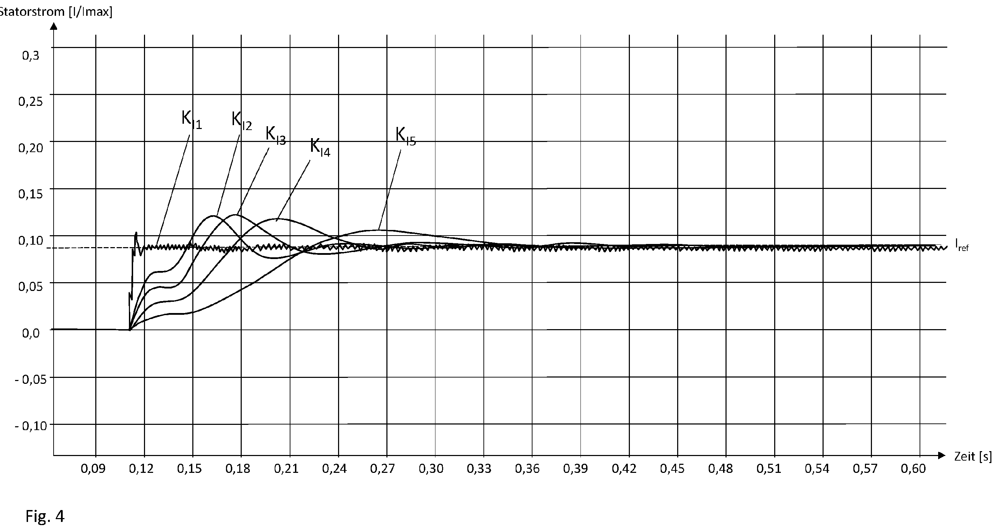

Die ausgeprägte mechanische Schwingung des Rotors ist in Figur 3 in der Kurve $K_{R1}$ zu sehen. Figur 3 zeigt in fünf Kurven $K_{R1}$, $K_{R2}$, $K_{R3}$, $K_{R4}$, $K_{R5}$ für verschiedene Reglerparametrierungen jeweils den Verlauf der Rotorposition über der Zeit. Figur 4 zeigt in dazu korrespondierenden fünf Kurven $K_{I1}$, $K_{I2}$, $K_{I3}$, $K_{I4}$, $K_{I5}$ für die verschiedenen Reglerparametrierungen jeweils den Verlauf des Statorstroms über der Zeit. Wie die Kurve $K_{I1}$ erkennen lässt, wird der Strom I mit der hier gewählten Parametrierung schnell und gut eingeregelt, die Rotorposition schwankt aber stark und lange, wie die Kurve $K_{R1}$ zeigt.

Wird der Stromregler nun weniger steif oder "langsamer" ausgelegt, nimmt die mechanische Schwingung des Rotors ab. Dies zeigen die Kurven $K_{R2}$, $K_{R3}$, $K_{R4}$ und $K_{R5}$ im Vergleich zueinander. Die Kurven $K_{R2}$ und $K_{I2}$ sind mit einer Reglerparametrierung aufgezeichnet worden, bei der der geschlossene Regelkreis eine Übertragungsfunktion mit einer Zeitkonstanten von 5ms aufweist. Bei den Kurven $K_{R3}$ und $K_{I3}$ ist die Reglerparametrierung derart, dass der geschlossene Regelkreis eine Übertragungsfunktion mit einer Zeitkonstanten von 10ms aufweist. Bei den Kurven $K_{R4}$ und $K_{I4}$ beträgt die Zeitkonstante 25ms und bei den Kurven $K_{R5}$ und $K_{I5}$ 50ms. Wie in Figur 3 erkennbar ist, nimmt die mechanische Schwingung des Rotors mit zunehmender Zeitkonstante ab und zwar sowohl hinsichtlich der Höhe des Überschwingens, als auch hinsichtlich der Anzahl der Pendelbewegungen, bis die Zielposition stationär ist, siehe Kurven $K_{R2}$, $K_{R3}$, $K_{R4}$ und $K_{R5}$. Denn dadurch, dass bei einem weniger steifen Stromregler die durch die Bewegung entstehende induzierte Gegenspannung nun den Strom reduzieren kann, reduzieren sich auch das Drehmoment und die Beschleunigung und es wird weniger kinetische Energie in das System eingetragen. Nachteilig ist dabei, dass es zu einem deutlichen Überschwingen im Strom kommt, wie die zugehörigen Kurven $K_{I2}$, $K_{I3}$, $K_{I4}$ und $K_{I5}$ zeigen. Das bedeutet, dass für diese Parametrierungen des Stromreglers der Sollwert für den Strom geringer, ggf. auch deutlich geringer als der maximal zulässige Strom gewählt werden müsste, um einen Überstrom zu vermeiden. Dadurch wird aber auch das maximal erreichbare Moment reduziert, das sich ergibt, wenn der Rotor blockiert ist.

Diesen Nachteil überwindet das erfindungsgemäße Verfahren durch die erfindungsgemäße Umschaltung zwischen dem ersten und dem zweiten Satz an Reglerparametern, nämlich zwischen einer steifen bzw. schnellen und einer demgegenüber weicheren bzw. langsameren Regelung, wobei die steife Parametrierung verwendet wird, wenn der Strom über dem Sollwert $I_{ref}$ liegt, und die weichere Parametrierung, d.h. mit der höheren Zeitkonstante verwendet wird, wenn der Strom unter dem Sollwert $I_{ref}$ liegt. Somit kann der Betrag des Referenzstromraumzeigers, insbesondere der Sollwert des Stromreglers dem maximal einstellbaren Strom entsprechen. Ferner kann aufgrund der Umschaltung der Zwischenkreis "schlank" ausgeführt werden, d.h. eine nur geringe Kapazität aufweisen. Bevorzugt kann der Spannungszwischenkreis eine Zwischenkreiskapazität von weniger als 0,02 μF pro Watt besitzen.

Der zweite Aspekt des erfindungsgemäßen Verfahrens, d.h. die Umschaltung der Reglerparametrierung, kann auch bei der Einstellung des gemäß dem vorgegebenen, ansteigenden Drehzahlverlauf rotierenden Referenzstromraumzeigers gemäß dem ersten Aspekt des Verfahrens verwendet werden. Dies gilt auch für alle Weiterbildungen des zweiten Aspekts. Allerdings sei betont, dass der zweite Aspekt des Verfahrens vom ersten Aspekt des Verfahrens unabhängig ist und deshalb auch in Alleinstellung verwendet werden kann.

So kann das Verfahren gemäß dem ersten Aspekt dahingehend weitergebildet werden, dass bei der Einstellung des gemäß dem vorgegebenen, ansteigenden Drehzahlverlauf rotierenden Referenzstromraumzeigers der Istwert der von dem ersten Stromregler eingestellten ersten Stromkomponente des Statorstroms oder eine vom Istwert der ersten Stromkomponente abhängige erste Größe ermittelt, und der Istwert oder die erste Größe mit dem Sollwert des ersten Stromreglers oder eine von diesem Sollwert abhängige zweite Größe verglichen wird, und für den ersten Stromregler ein erster Satz von Reglerparametern verwendet wird, wenn der Istwert oder die erste Größe über dem Sollwert oder über der zweiten Größe liegt, und ein zweiter Satz von Reglerparametern verwendet wird, wenn der Istwert oder die erste Größe unter dem Sollwert oder unter der zweiten Größe liegt, wobei der erste Satz von Reglerparametern den ersten Stromregler derart parametriert, dass er schneller regelt, als in dem Fall, dass er mit dem zweiten Satz von Reglerparametern parametriert ist.

Die Umschaltung zwischen den Reglerparametern kann somit auf verschiedene Weise ausgelöst werden:

a) Im einfachsten Fall kann der Istwert der ersten Stromkomponente mit dem Sollwert des ersten Stromreglers verglichen werden.
b) Alternativ kann aus dem Istwert der ersten Stromkomponente die erste Größe berechnet werden und diese mit dem Sollwert des ersten Stromreglers verglichen werden.
c) Gemäß einer weiteren Alternative kann der Istwert der ersten Stromkomponente mit der zweiten Größe verglichen werden, die aus dem Sollwert berechnet worden ist.
d) Weiter alternativ kann aus dem Istwert der ersten Stromkomponente die erste Größe berechnet werden und diese mit der zweiten Größe verglichen werden, die aus dem Sollwert berechnet worden ist.

Durch die Verwendung der ersten und/ oder zweiten Größe in den Varianten b), c) und d) kann die Bedingung für die Umschaltung zwischen dem ersten und zweiten Satz von Reglerparametern je nach Bedarf angepasst werden. Die erste Größe kann das Produkt aus dem Istwert und einem ersten Gewichtungsfaktor sein, der beispielsweise zwischen 0,9 und 1,1 betragen kann. Die zweite Größe kann das Produkt aus dem Sollwert und einem zweiten Gewichtungsfaktor sein, der beispielsweise zwischen 0,9 und 1,1 betragen kann. In Abhängigkeit des Ergebnisses des jeweiligen Vergleichs gemäß a) bis d) wird der erste oder zweite Satz von Reglerparametern für den ersten Stromregler verwendet.

Der Betrag des Referenzstromraumzeigers, insbesondere der Sollwert des Stromreglers, kann hier ebenfalls dem maximal einstellbaren Strom entsprechen. **Ferner kann** der Zwischenkreis "schlank" ausgeführt werden, d.h. eine nur geringe Kapazität aufweisen. Bevorzugt kann der Spannungszwischenkreis eine Zwischenkreiskapazität von weniger als 0,02 μF pro Watt besitzen.

Die nachfolgenden Ausführungen betreffen sowohl den ersten als auch den zweiten Aspekt des erfindungsgemäßen Verfahrens.

Die Beurteilung, ob der Istwert oder die erste Größe unter oder über dem Sollwert oder der zweiten Größe liegt, kann anhand einer Fehlerabweichung zwischen den miteinander zu vergleichenden Größen, d.h. dem Sollwert und dem Istwert, dem Sollwert und der ersten Größe, der zweiten Größe und dem Istwert oder der zweiten Größe und der ersten Größe erfolgen, wobei für den ersten Stromregler der erste Satz von Reglerparametern verwendet wird, wenn die Fehlerabweichung negativ ist, und der zweite Satz von Reglerparametern verwendet wird, wenn die Fehlerabweichung positiv ist.

Der Referenzstromraumzeiger I kann für den Hochlauf hinsichtlich seiner Lage grundsätzlich beliebig gewählt werden. Ein einfacher Fall liegt jedoch vor, wenn er nur von einer der beiden Stromkomponenten des Referenzstromraumzeigers gebildet bzw. eingestellt wird. Dies ist sinnvollerweise die id-Stromkomponente, weil nur diese den magnetischen Fluss erzeugt, der notwendig ist, um den Rotor auszurichten. Demgegenüber kann die iq-Stromkomponente folglich null sein. In Figur 2 ist dies anhand des dort eingezeichneten Referenzstromraumzeigers I erkennbar, der nur die auf der d-Achse liegende Stromkomponente id aufweist, während die Stromkomponente iq, genauer gesagt der Sollwert für die zweite Stromkomponente iq null ist. Der hier eingestellte Referenzstromraumzeiger I besitzt folglich den Betrag id und den Winkel $\varphi$ in Bezug auf das $\alpha\beta$-Koordinatensystem. Vorteilhaft ist es deshalb, wenn der Referenzstromraumzeiger nur durch den ersten Stromregler eingestellt wird, während ein Sollwert für einen zweiten Stromregler der vektoriellen Stromregelung, der die zweite Stromkomponente des Referenzstromraumzeigers einstellen kann, null ist.

Vorzugsweise weist die vektorielle Stromregelung den ersten, die erste Stromkomponente einstellenden Stromregler sowie einen zweiten, eine zweite Stromkomponente einstellenden Stromregler auf, wobei die erste und zweite Stromkomponente gemeinsam den Referenzstromraumzeiger definieren. Sofern der Referenzstromraumzeiger nur durch den ersten Stromregler eingestellt wird, ist der Sollwert des zweiten Stromreglers null, d.h. die zweite Stromkomponente wird auf null geregelt. Der Sollwert der zweiten Stromkomponente kann jedoch auch von null verschieden sein, womit ein beliebiger Referenzstromraumzeiger eingestellt werden kann.

Der erste Stromregler ist vorzugsweise jener, der bei einer sich an den Hochlauf anschließenden, feldorientierten Regelung der permanentmagnetischen Synchronmaschine im Normalbetrieb dazu bestimmt ist, die id-Stromkomponente eines Statorstromraumzeigers einzustellen, während der zweite Stromregler dazu bestimmt ist, die iq-Stromkomponente des Statorstromraumzeigers einzustellen. Dies hat den Vorteil, dass die für die feldorientierte Regelung vorhandene Regelungsstruktur verwendet werden kann, um den Hochlauf der Synchronmaschine gemäß dem ersten oder zweiten Aspekt durchzuführen. Es müssen keine neuen Regler implementiert werden.

In einer Ausführungsvariante kann vorgesehen sein, dass der erste und zweite Satz von Reglerparametern sowohl den ersten als auch den zweiten Stromregler parametriert. Die Umschaltung vom ersten auf den zweiten Satz von Reglerparametern und umgekehrt findet vorzugsweise gleichzeitig statt, beispielsweise indem ein gemeinsamer Umschalter ein Umschaltsignal gleichzeitig an den ersten und den zweiten Stromregler überträgt. Ausgelöst werden kann diese Umschaltung wie oben beschrieben dann, wenn der Istwert oder die erste Größe über den Sollwert oder über die zweite Größe steigt, wobei dann erster Satz von Reglerparametern verwendet wird, anderenfalls wird der zweite Satz von Reglerparametern verwendet.

Die Umschaltung kann in einer Ausführungsvariante allein in Abhängigkeit von der ersten Stromkomponente erfolgen, genauer gesagt in Abhängigkeit der Fehlerabweichung/ Differenz des Istwerts der ersten Stromkomponente, oder der daraus berechneten ersten Größe, von ihrem Sollwert, oder der daraus berechneten zweiten Größe.

Alternativ kann die Umschaltung für beide Stromregler in Abhängigkeit von der ersten und zweiten Stromkomponente erfolgen, insbesondere in Abhängigkeit der Fehlerabweichung/ Differenz einer ersten Größe, die aus dem Istwert der ersten Stromkomponente und dem Istwert der zweiten Stromkomponente gebildet ist, zur zweiten Größe, die aus dem Sollwert der ersten Stromkomponente und dem Sollwert der zweiten Stromkomponente gebildet ist. Beispielsweise kann die erste Größe die Summe der Quadrate der genannten Istwerte und die zweite Größe die Summe der Quadrate der genannten Sollwerte sein.

Die erste Größe kann gemäß einer Weiterbildung auch die Wurzel der Summe der Quadrate der genannten Istwerte und die zweite Größe kann die Wurzel der Summe der Quadrate der genannten Sollwerte sein. Die erste Größe entspricht in diesem Fall dem Betrag (Amplitude) des aus dem Istwert der ersten Stromkomponente und dem Istwert der zweiten Stromkomponente gebildeten tatsächlichen Stromraumzeigers, und die zweite Größe entspricht dem Betrag (Amplitude) des aus dem Sollwert der ersten Stromkomponente und dem Sollwert der zweiten Stromkomponente gebildeten Referenzstromraumzeigers. Mit anderen Worten erfolgt die Umschaltung hier in Abhängigkeit eines Fehlerstromraumzeigers, der der Differenz aus dem tatsächlichen Stromraumzeiger und dem Referenzstromraumzeiger entspricht.

In einer weiteren Ausführungsvariante kann die Umschaltung zwischen dem ersten und zweiten Satz von Reglerparametern für den zweiten Stromregler unabhängig von der Umschaltung der Reglerparametersätze des ersten Stromreglers erfolgen. Beispielsweise kann die Umschaltung zwischen dem ersten und zweiten Satz von Reglerparametern für den zweiten Stromregler nur in Abhängigkeit der zweiten Stromkomponente erfolgen, während die Umschaltung zwischen dem ersten und zweiten Satz von Reglerparametern für den ersten Stromregler nur in Abhängigkeit der ersten Stromkomponente erfolgt.

Der erste Satz an Reglerparametern kann den ersten Stromregler oder den ersten und zweiten Stromregler beispielsweise derart parametrieren, dass ein den jeweiligen ersten oder zweiten Stromregler umfassender, offener Regelkreis eine Übertragungsfunktion besitzt, die ein sogenanntes symmetrisches Optimum (SO) aufweist. Mit anderen Worten ist/ sind der erste oder der erste und zweite Stromregler dann nach dem Verfahren des Symmetrischen Optimums parametriert, um ein gutes Störverhalten zu erreichen. Eine Parametrierung nach dem symmetrischen Optimum ist bei den Kurven $K_{R1}$ und $K_{I1}$ verwendet in Figuren 3 und 4. Die Auslegung eines Reglers nach dem "Symmetrischen Optimum" ist an sich bekannt. Insoweit wird auf die einschlägige Fachliteratur verwiesen, wie z.B. "Elektrische Antriebe/ Dierk Schröder, Springer Verlag, 2. Auflage 2001, ISBN 3-540-41994-2, Kapitel 3.2". Das symmetrische Optimum stellt in der elektrischen Antriebstechnik ein wichtiges Optimierungskriterium dar, wobei sich der Name auf den Frequenzgang des offenen optimierten Regelkreises bezieht, dessen Phasengang symmetrisch zum Amplitudendurchtritt liegt.

Demgegenüber kann der zweite Satz (Set2) an Reglerparametern den ersten oder den ersten und den zweiten Stromregler derart parametrieren, dass ein den jeweiligen ersten oder zweiten Stromregler umfassender, geschlossener Regelkreis eine Übertragungsfunktion besitzt, die eine Zeitkonstante zwischen 5ms und 20ms aufweist. Eine solche Parametrierung ist bei den Kurven $K_{R2}$ bis $K_{R5}$ und $K_{I2}$ bis $K_{I5}$ verwendet.

Eine einfache Implementierung der Stromregelung wird erreicht, wenn der erste Stromregler ein P- oder PI-Regler ist oder aufweist, und die Verstärkungsfaktoren für einen Proportionalanteil des P-Reglers oder einen Proportional- und einen Integralanteil des PI-Reglers sind. Jeder der beiden Sätze an Reglerparametern kann somit nur einen Parameterwert, nämlich für den Proportionalanteil, oder zwei Parameterwerte umfassen, nämlich für den Proportionalanteil und den Integralanteil. Dasselbe gilt für den zweiten Stromregler.

In einer Ausführungsvariante kann der zweite Stromregler dieselben Sätze an Reglerparametern verwenden, wie der erste Stromregler. Gemäß einer anderen Ausführungsvariante kann jedoch vorgesehen sein, dass jeder Stromregler seine eigenen Reglerparameter hat, so dass diese unterschiedlich sein können. In diesem Fall können der erste und zweite Satz an Reglerparametern jeweils zwei oder vier Reglerparameter umfassen, nämlich jeweils einen Proportionalanteil für den ersten und zweiten Stromregler, oder jeweils einen Proportional- und einen Integralanteil für den ersten und zweiten Stromregler.

Nachfolgend wird erneut auf die Figuren Bezug genommen, die Ausführungsbeispiele der Erfindung zeigen.

Wie Figur 2 erkennen lässt, besteht jeder Referenzstromraumzeiger I des Statorstroms in dem für die vektorielle Stromregelung verwendeten dq-Koordinatensystem aus der vektoriellen Addition der beiden Stromkomponenten iδ und iγ, die in Richtung der entsprechenden Koordinatenachse δ bzw. γ zeigen. Das rotorbezogene δγ-Koordinatensystem rotiert gegenüber dem statorbezogenen αβ-Koordinatensystem und besitzt zu diesem den Winkel θ, wie dies zuvor in Bezug zu Figur 1 erläutert ist. Statorbezogene Größen α,β und rotierende, für die Stromregelung verwendete Größen d,q können durch die d/q-Transformation, auch Park-Transformation genannt, bzw. die inverse d/q-Transformation oder inverse Park-Transformation, ineinander umgerechnet werden. Die Größen iδ, iγ sind dagegen unbekannt. Wenn nach dem Hochlauf die tatsächliche Rotorlage für die Stromregelung verwendet wird, dann entspricht das dq-Koordinatensystem dem rotorbezogenen δγ-Koordinatensystem. Während des gesteuerten Hochlaufs ist dies jedoch nicht der Fall, weil die Rotorposition unbekannt ist, d.h. zwischen dem dq-Koordinatensystem und dem rotorbezogenen δγ-Koordinatensystem liegt der unbekannte Winkel ϑ.

Gleichwohl wird erfindungsgemäß für den gesteuerten Hochlauf das dq-Koordinatensystem mit den Stromkomponenten id, iq verwendet, um den Referenzstromraumzeiger I einzustellen, weil die die Stromkomponenten id, iq einstellenden Stromregler bereits aufgrund der nach dem Hochlauf erfolgenden vektoriellen Stromregelung vorhanden sind, und somit keine weiteren Stromregler zur Einstellung oder Regelung der Stromkomponenten iδ und iγ benötigt werden.

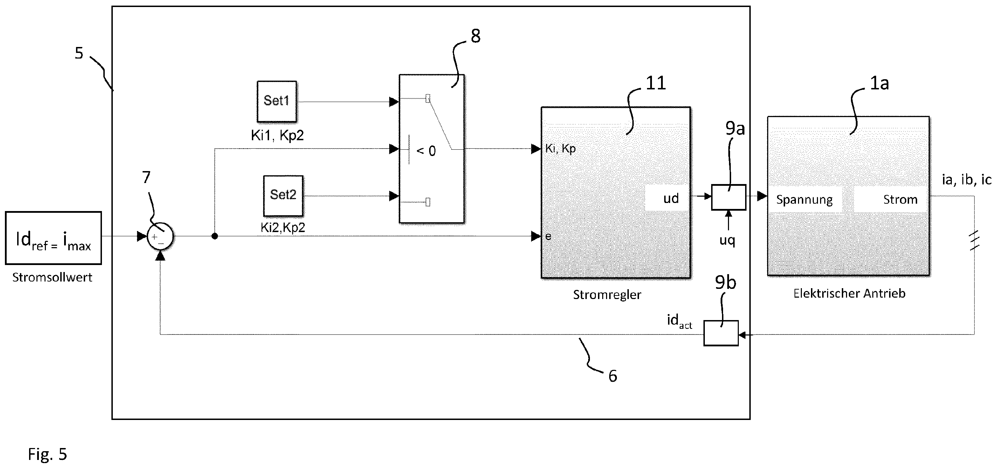

Figur 5 veranschaulicht eine Implementierung der erfindungsgemäßen Stromregelung 5 während des Hochlaufs anhand eines Blockschaltbildes, wobei hier die Regelung der id-Stromkomponente gezeigt ist, während die iq-Stromkomponente auf null geregelt wird, d.h. der Referenzstromraumzeiger nur durch die id-Stromkomponente gebildet wird. Die Stromregelung 5 umfasst einen Regelkreis mit einem Stromregler 11, nachfolgend erster Stromregler 11 genannt, mit negativer Rückkopplung 6 des Stromistwerts $id_{act}$ auf den Reglereingang, an dem außerdem der Stromsollwert für die id-Stromkomponente $Id_{ref} = I_{max}$ vorgegeben wird. Dieser Sollwert entspricht dem zulässigen maximalen Statorstrom, der dauerhaft fließen kann. Wie angesprochen, ist für die iq-Stromkomponente der Sollwert gleich null ($Iq_{ref} = 0$), so dass der Referenzstromraumzeiger I = id auf der d-Achse des dq-Koordinatensystems liegt, vgl. Figur 2.

Der Istwert $Id_{act}$ des Statorstroms wird aus einer Messung der Phasenströme ia, ib, ic ermittelt. In bekannter Weise können diese drei Phasenströme ia, ib, ic dann durch die Clarke-Transformation in eine α- und eine β-Stromkomponente im αβ-Koordinatensystem, und diese wiederum durch die Park-Transformation in eine d- und eine q-Stromkomponente im dq-Koordinatensystem umgewandelt werden, wodurch man den Istwert $Id_{act}$ des Statorstroms erhält. Dies erfolgt in Block 9b. Ein Subtrahierer 7 am Reglereingang bildet die Fehlerabweichung e zwischen dem Soll- und dem Istwert, die auf den ersten Stromregler 11 geführt ist. Der erste Stromregler 11 ist hier als PI-Regler ausgeführt und besitzt somit einen Reglerparameter Kp, der den Verstärkungsfaktor für den Proportionalanteil angibt, und einen Reglerparameter Ki, der den Verstärkungsfaktor für den Integralanteil angibt. In Abhängigkeit der Fehlerabweichung e liefert der erste Stromregler 11 einen Sollwert für die d-Komponente ud der Statorspannung im dq-Koordinatensystem. Analog dazu erfolgt die Regelung der q-Komponente uq der Statorspannung. Die d- und q-Komponente ud, uq der Statorspannung werden in bekannter Weise mittels einer in Block 9a ausgeführten inversen Park- und anschließender inversen Clark-Transformation in Phasenspannungen umgewandelt, die der Frequenzumrichter anschließend einstellt. Synchronmaschine 1 und Frequenzumrichter bilden zusammen den in Figur 5 von Block 1a umfassten elektrischen Antrieb, der am Ausgang die Phasenströme ia, ib, ic hat.

Diese an sich bekannte und übliche Struktur einer Stromregelung wird gemäß dem zweiten Aspekt der Erfindung durch einen Umschalter 8 erweitert, der eine Beurteilung vornimmt, ob der Istwert $Id_{act}$ unter oder über dem Sollwert $Id_{ref}$ liegt. Hierzu wird die Fehlerabweichung e zwischen dem Sollwert $Id_{ref}$ und dem Istwert $Id_{act}$ verwendet. Für den Stromregler 11 wird der erste Satz "Set1" von Reglerparametern Ki, Kp verwendet, wenn die Fehlerabweichung e negativ ist, und der zweite Satz "Set2" von Reglerparametern Ki2, Kp2 verwendet, wenn die Fehlerabweichung e positiv ist. Ist der Istwert $id_{act}$ zu hoch, d.h. dass der Strom $id_{act}$ über den Sollwert $Id_{ref}$ schießt (e<0), wird die mit dem ersten Satz von Reglerparametern Ki1, Kp1 einstellbare steife Reglerparametrierung verwendet, um das Überschießen unverzüglich zu kompensieren und damit einen Überstrom und/ oder eine Überspannung in dem schlank gewählten Zwischenkreis des Frequenzumrichters zu verhindern. Liegt der Istwert $id_{act}$ dagegen unter dem Sollwert $Id_{ref}$ (e>0) wird die weichere Parametrierung, d.h. der zweite Satz von Reglerparametern Ki2, Kp2 mit der höheren Zeitkonstante verwendet, um die mechanische Schwingung des Rotors 3 zu dämpfen.

Der erste Satz "Set 1" von Reglerparametern Ki, Kp kann hier so gewählt sein, dass der erste Stromregler 11 das Optimierungskriterium des symmetrischen Optimums (SO) erfüllt, wohingegen der zweite Satz "Set 2" von Reglerparametern Ki2, Kp2 so gewählt sein kann, dass die den ersten Stromregler 11 umfassende Übertragungsfunktion des geschlossenen Regelkreises für die Stromregelung eine Zeitkonstante von 5ms bis 20ms aufweist. Mit diesen Parametrierungen sind in Versuchen gute Ergebnisse erzielt worden.

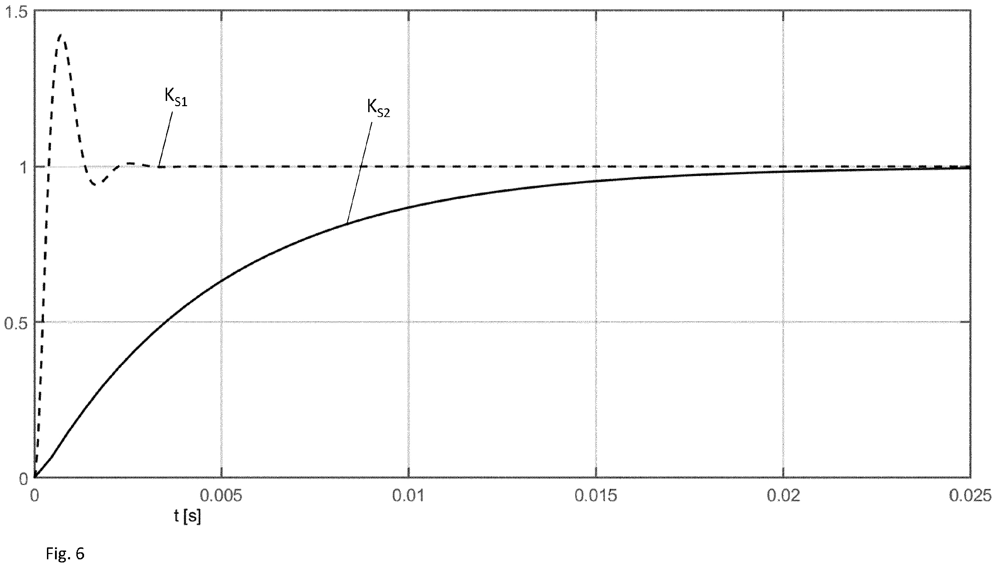

Figur 6 veranschaulicht das Verhalten der beiden Reglerparametrierungen im Vergleich zueinander bei einem Sollwertsprung. Sie zeigt den zeitlichen Verlauf des Stromistwerts $id_{act}$ des ersten Stromreglers 11 für den id-Strom bei einem Sollwertsprung, jeweils mit weicher bzw. langsamer Reglerparametrierung gemäß dem zweiten Satz von Reglerparametern bei einer Zeitkonstante von 5ms, dargestellt durch die Kurve $K_{S2}$ mit der durchgezogenen Linie, und mit steifer bzw. schneller Reglerparametrierung gemäß dem ersten Satz von Reglerparametern, dargestellt durch die Kurve $K_{S1}$ mit der gestrichelten Linie, wobei die Stromregelung bei $K_{S1}$ mit dem ersten Satz von Reglerparametern nach dem Symmetrischen Optimum optimiert ist.

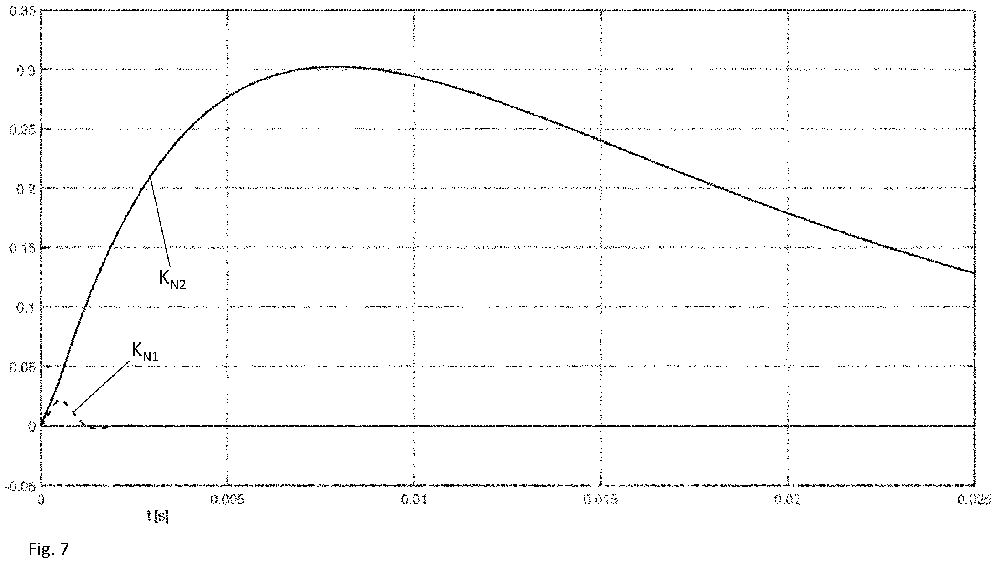

Figur 7 veranschaulicht das Verhalten der beiden Reglerparametrierungen im Vergleich zueinander bei einem Störgrößensprung. Sie zeigt den zeitlichen Verlauf des Stromistwerts $id_{act}$ des ersten Stromreglers 11 für den id-Strom bei einem Störgrößensprung, jeweils mit weicher bzw. langsamer Reglerparametrierung gemäß dem zweiten Satz von Reglerparametern bei einer Zeitkonstante von 5ms, dargestellt durch die Kurve $K_{N2}$ mit der durchgezogenen Linie, und mit steifer bzw. schneller Reglerparametrierung gemäß dem ersten Satz von Reglerparametern, dargestellt durch die Kurve $K_{N1}$ mit der gestrichelten Linie, wobei die Stromregelung bei $K_{N1}$ mit dem ersten Satz von Reglerparametern nach dem Symmetrischen Optimum optimiert ist.

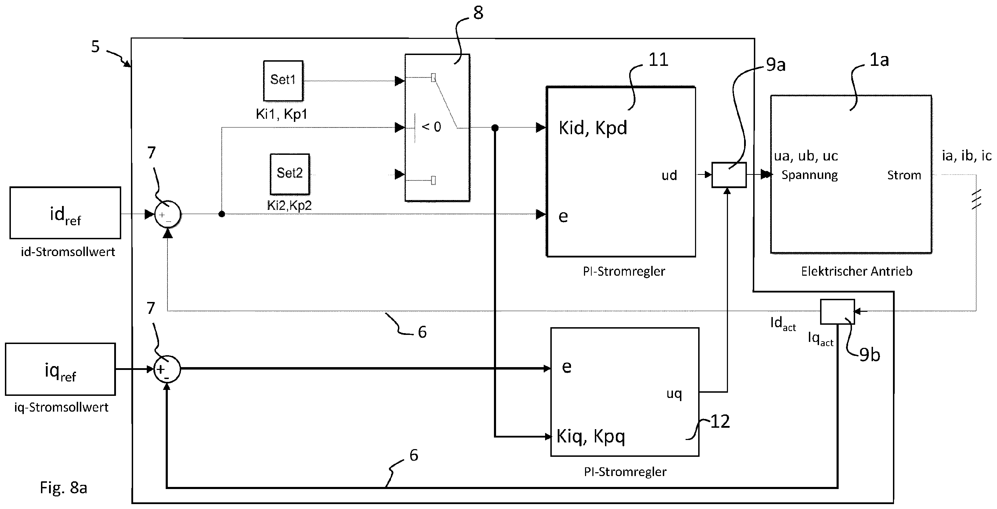

Figur 8a zeigt eine ausführlichere Implementierung der erfindungsgemäßen Stromregelung 5 anhand eines Blockschaltbildes. Gegenüber der Darstellung in Figur 5 ist die Regelungsstruktur hier durch einen zweiten Stromregler 12 vervollständigt, der die iq-Komponente gemäß einem Sollwert $iq_{ref}$ unabhängig von der id-Stromkomponente einregelt. Alle in Bezug zum ersten Stromregler 11 beschriebenen Merkmale, gelten für den zweiten Stromregler 12 entsprechend, so dass auf diese Erläuterungen verwiesen wird. Allerdings stellt der zweite Stromregler 12 eine Spannung uq, um die iq-Komponente einzuregeln, z.B. auf 0 zu halten. Der Umschalter 8 wirkt in dieser Ausführungsvariante auch auf den zweiten Stromregler 12 und zwar derart, dass der erste oder zweite Satz von Reglerparametern nicht nur an den ersten Stromregler 11, sondern auch an den zweiten Stromregler 12 gegeben wird. Der erste und der zweite Stromregler 11, 12 verwenden hier also dieselben Reglerparameter. Die Umschaltung der Regler zwischen den Reglerparametersätzen erfolgt gleichzeitig, und zwar in dieser Ausführungsvariante allein anhand der Fehlerabweichung bei der Regelung des id-Stroms.

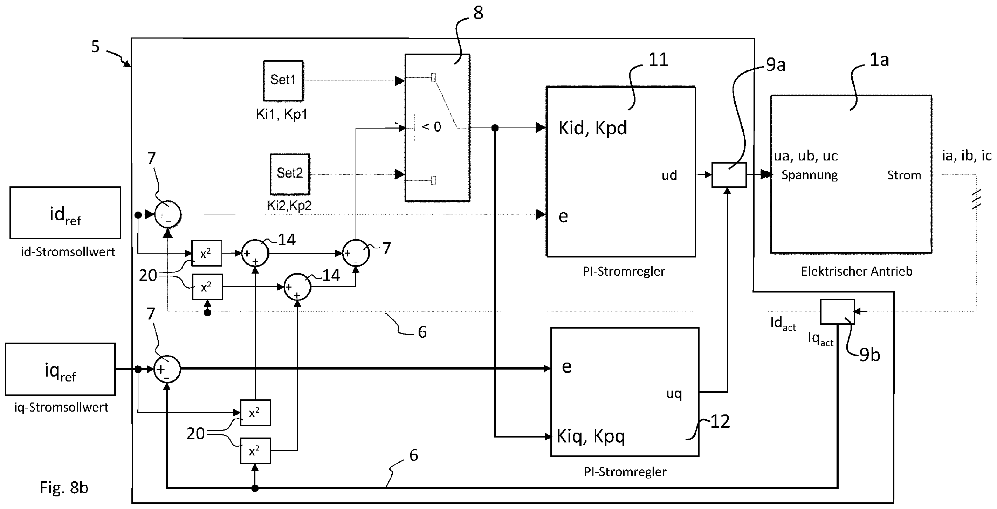

Figur 8b zeigt eine weitere Implementierung einer erfindungsgemäßen Stromregelung 5 anhand eines Blockschaltbildes, die sich von der Ausführungsvariante in Figur 8a darin unterscheidet, dass die Umschaltung zwischen dem ersten und zweiten Satz von Reglerparametern für beide Stromregler 11, 12 in Abhängigkeit eines Vergleichs einer ersten Größe, die aus den Istwerten $id_{act}$, $iq_{act}$ der beiden Stromkomponenten id, iq berechnet wird, mit einer zweiten Größe erfolgt, die aus den Sollwerten $id_{ref}$, $iq_{ref}$ der beiden Stromkomponenten id, iq berechnet wird. Genauer betrachtet, erfolgt die Berechnung der ersten Größe derart, dass die Istwerte $id_{act}$, $iq_{act}$ der beiden Stromkomponenten id, iq jeweils in einem Quadrierer 20 quadriert und die so gebildeten Quadrate $id^2_{act}$, $iq^2_{act}$ anschließend in einem Addierer 14 addiert werden. Analog hierzu erfolgt die Berechnung der zweiten Größe derart, dass die Sollwerte $id_{ref}$, $iq_{ref}$ der beiden Stromkomponenten id, iq jeweils in einem Quadrierer 20 quadriert und die so gebildeten Quadrate $id^2_{ref}$, $iq^2_{ref}$ anschließend in einem Addierer 14 addiert werden, wobei die so gebildete Quadratsumme $id^2_{act} + iq^2_{act}$ die erste Größe bzw. und die Quadratsumme $id^2_{ref} + iq^2_{ref}$ zweite Größe ist. Anschließend wird in einem Subtrahierer 7 die erste Größe von der zweiten Größe abgezogen, was ebenfalls einer Fehlerabweichung entspricht, die dem Umschalter 8 zugeführt ist. Wie im vorherigen Beispiel wählt dann der Umschalter 8 den ersten Satz von Reglerparametern, wenn die Fehlerabweichung negativ ist, also die erste Größe größer als die zweite Größe ist, und den zweiten Satz von Reglerparametern, wenn die Fehlerabweichung positiv ist, also die erste Größe kleiner als die zweite Größe ist.

Anschaulich gesprochen, erfolgt die Umschaltung zwischen den Reglerparametersätzen gemäß der Variante in Figur 8b in Abhängigkeit des Betrags (Amplitude) eines Fehlerstromraumzeigers, der die Fehlerabweichung beschreibt zwischen dem mit den Sollwerten $id_{ref}$, $iq_{ref}$ (auch hier kann $iq_{ref}$ null sein) für die Stromkomponenten id, iq eingestellten Referenzstromraumzeiger und dem tatsächlichen Stromraumzeiger, der durch die Istwerte $id_{act}$, $iq_{act}$ der Stromkomponenten id, iq definiert ist. Denn der tatsächliche Stromraumzeiger hat den Betrag $\mathrm{sqrt}(id^2_{act} + iq^2_{act})$. Er entspricht also der Wurzel aus der ersten Größe. Der Referenzstromraumzeiger hat den Betrag sqrt($id^2_{ref}$ + $iq^2_{ref}$) und entspricht somit der Wurzel aus der zweiten Größe. Da die Wurzeln stets positiv sind und es für den Vergleich nur darauf ankommt, welche der ersten und zweiten Größe größer ist, kann die Wurzelbildung entfallen und ein direkter Vergleich der Quadratsummen miteinander erfolgen. Der Vergleich der Quadratsummen wird mit Hilfe des Subtrahierers 7 vereinfacht, da die Differenz aus der ersten und der zweiten Größe [($id^2_{ref}$ + $iq^2_{ref}$) - ($id^2_{act}$ + $iq^2_{act}$)], d.h. der Fehlerabweichung, nur noch daraufhin geprüft werden muss, ob diese Differenz der Quadratsummen positiv oder negativ ist.

Der erste und der zweite Stromregler 11, 12 verwenden in der Variante gemäß Figur 8b also ebenfalls dieselben Reglerparameter, und die Umschaltung der Regler zwischen den Reglerparametersätzen erfolgt gleichzeitig. Allerdings wird als Umschaltkriterium in dieser Ausführungsvariante die Fehlerabweichung bei der Regelung des id-Stroms und des iq-Stroms verwendet, genauer gesagt der Betrag (Amplitude) des Fehlerstromraumzeigers.

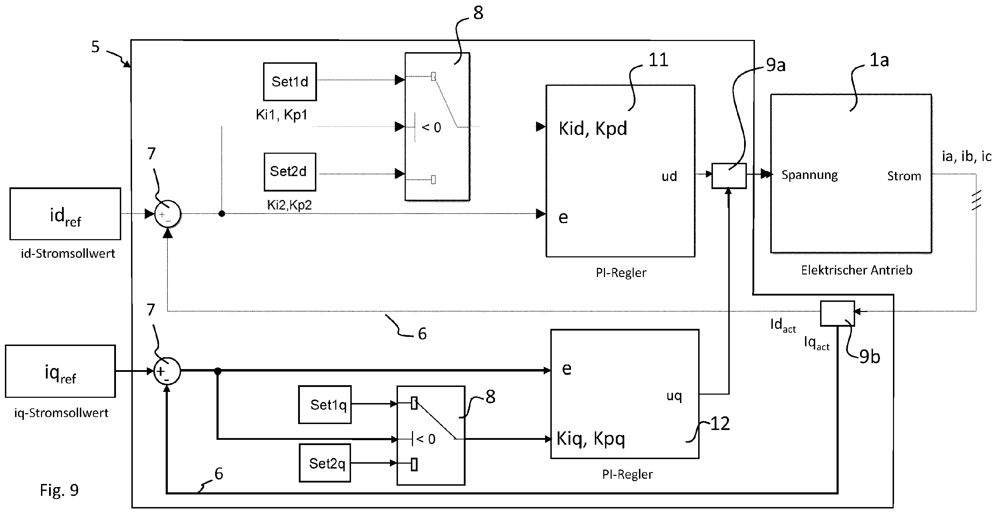

Figur 9 zeigt eine dritte Implementierung einer erfindungsgemäßen Stromregelung 5 anhand eines Blockschaltbildes. Diese unterscheidet sich von der Implementierung gemäß Figur 8a und 8b darin, dass die Stromregler 11, 12 jeweils einen eigenen Reglerparametersatz verwenden. Aus diesem Grund sind zwei Umschalter 8 und jeweils ein erster und zweiter Satz von Reglerparametern pro Umschalter 8 vorhanden. So schaltet der auf den ersten Stromregler 11 wirkende Umschalter 8 zwischen dem ersten Satz "Set1d" und dem zweiten Satz "Set2d" von Reglerparametern um, und der auf den zweiten Stromregler 11 wirkende Umschalter 8 zwischen dem ersten Satz "Set1q" und dem zweiten Satz "Set2q" von Reglerparametern um. Die beiden ersten Sätze "Set1d", "Set1q" haben unterschiedliche Reglerparameter. Ferner haben die beiden zweiten Sätze "Set2d", "Set2q" unterschiedliche Reglerparameter.

Des Weiteren verwenden die beiden Umschalter 8 in Figur 9 unterschiedliche Umschaltkriterien, was allerdings nicht zwingend ist. Während der dem ersten Stromregler 11 zugeordnete Umschalter 8 die Fehlerabweichung e der Id-Stromkomponente verwendet, verwendet der dem zweiten Stromregler 12 zugeordnete Umschalter 8 die Fehlerabweichung e der Iq-Stromkomponente. Beim ersten Stromregler 11 wird der erste Satz "Set1d" von Reglerparametern verwendet, wenn der Istwert $id_{act}$ über dem Sollwert $id_{ref}$ liegt, und der zweite Satz "Set2d" von Reglerparametern verwendet, wenn der Istwert $id_{act}$ unter dem Sollwert $id_{ref}$ liegt, wobei der erste Satz "Set1d" von Reglerparametern den ersten Stromregler 11 derart parametriert, dass er schneller regelt, als in dem Fall, dass er mit dem zweiten Satz "Set2d" von Reglerparametern parametriert ist. Ferner wird beim zweiten Stromregler 12 der erste Satz "Set1q" von Reglerparametern verwendet, wenn der Istwert $iq_{act}$ über dem Sollwert $iq_{ref}$ liegt, und der zweite Satz "Set2q" von Reglerparametern verwendet, wenn der Istwert $iq_{act}$ unter dem Sollwert $iq_{ref}$ liegt, wobei der erste Satz "Set1q" von Reglerparametern den zweiten Stromregler 12 derart parametriert, dass er schneller regelt, als in dem Fall, dass er mit dem zweiten Satz "Set2q" von Reglerparametern parametriert ist. Mit den unterschiedlichen Sätzen von Reglerparametern [Set1d, Set2d] und [Set1q, Set2q] für den ersten und zweiten Stromregler wird berücksichtigt, dass die Induktivität Ld in Richtung der d-Achse nicht gleich der Induktivität Lq in Richtung der q-Achse ist.

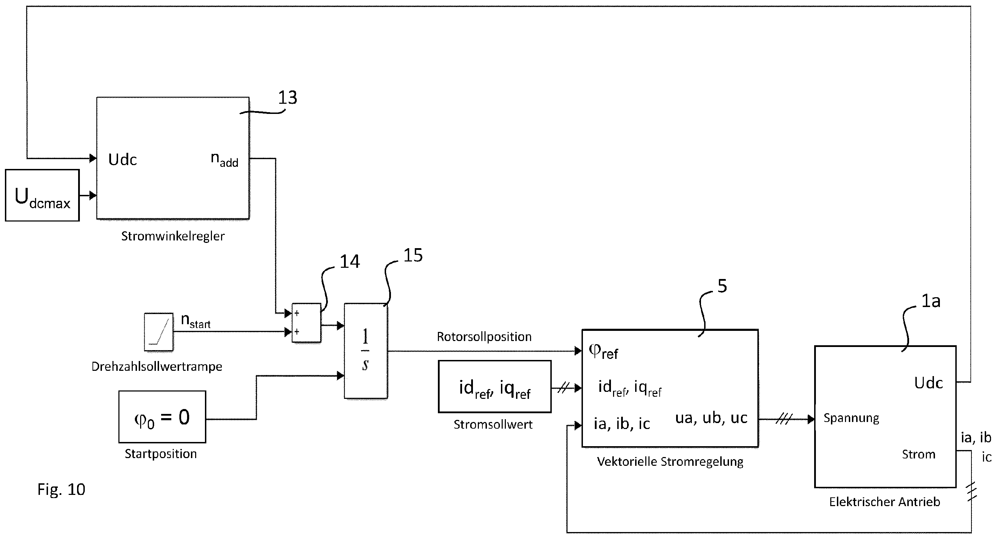

Figur 10 zeigt ein Blockschaltbild zur Ausführung des erfindungsgemäßen Verfahrens gemäß dem ersten Aspekt. Auch hier erfolgt für einen gesteuerten Hochlauf der Synchronmaschine 1 eine vektorielle Stromregelung 5, die einen gemäß einem vorgegebenen, ansteigenden Drehzahlverlauf $n_{start}$ rotierenden Referenzstromraumzeiger des Statorstroms einstellen. Die Stromregelung 5 ist hier nicht genauer dargestellt. Sie umfasst wie zuvor einen ersten, eine erste Stromkomponente des Statorstroms, nämlich den id-Strom einstellenden Stromregler 11, und einen zweiten, eine zweite Stromkomponente des Statorstroms, nämlich den iq-Strom einstellenden Stromregler 12.

Die vektorielle Stromregelung 5 stellt den Referenzstromraumzeiger im dq-Koordinatensystem derart ein, dass er einen Soll-Winkel $\varphi_{ref}$ besitzt, und zwar zur $\alpha$-Achse im $\alpha\beta$-Koordinatensystem. Dieser Soll-Winkel $\varphi_{ref}$ gibt die Rotorsollposition vor. Er wird durch Integration des Drehzahlverlaufs $n_{start}$ in einem Integrator 15 ermittelt, dem hierfür außerdem die Startposition bzw. der Start-Winkel $\varphi_0$ zugeführt ist, der einfacherweise zu null gesetzt werden kann. Der Drehzahlverlauf $n_{start}$ ist in diesem Beispiel eine Drehzahlsollwertrampe.

Erfindungsgemäß wird zu dem Drehzahlverlauf $n_{start}$ mit Hilfe eines Addierers 14 ein Drehzahlkorrekturwert $n_{add}$ hinzuaddiert. Dies bewirkt, dass der Referenzstromraumzeiger beschleunigt, d.h. schneller vorgedreht wird, als es der vorgegebene Drehzahlverlauf $n_{start}$ vorsieht. Diese Maßnahme erfolgt dann, wenn der Rotor 3 den Referenzstromraumzeiger bzw. das Statorfeld überholt, d.h. diesem voreilt, was ein Energie in den Zwischenkreis rückspeisendes, negatives Moment (Bremsmoment) zur Folge hat. Erkennbar ist dies anhand einer steigenden Zwischenkreisspannung $U_{dc}$, die am elektrischen Antrieb 1a, genauer gesagt an dessen Zwischenkreis, ermittelt, insbesondere gemessen wird. Die Zwischenkreisspannung $U_{dc}$ wird einem Stromwinkelregler 13 zugeführt, der den Drehzahlkorrekturwert $n_{add}$ ermittelt.

Eine Korrektur des Drehzahlverlaufs $n_{start}$ durch den Drehzahlkorrekturwert $n_{add}$ erfolgt nur dann, wenn die Zwischenkreisspannung $U_{dc}$ einen Grenzwert $U_{dcmax}$ überschreitet, der dem Stromwinkelregler 13 ebenfalls vorliegt. Der Stromwinkelregler 13 vergleicht die Zwischenkreisspannung $U_{dc}$ mit dem Grenzwert $U_{dcmax}$ und setzt den Drehzahlkorrekturwert $n_{add}$ auf einen Wert größer null, wenn der Grenzwert $U_{dcmax}$ überschritten ist. Im einfachsten Fall kann der Drehzahlkorrekturwert $n_{add}$ ein konstanter Wert sein. Es ist aber auch möglich, die Höhe des Drehzahlkorrekturwerts $n_{add}$ in Abhängig von der Abweichung der Zwischenkreisspannung $U_{dc}$ vom Grenzwert $U_{dcmax}$ zu wählen. Insbesondere kann der Drehzahlkorrekturwert $n_{add}$ proportional zur Abweichung der Zwischenkreisspannung $U_{dc}$ vom Grenzwert $U_{dcmax}$ sein. Das bedeutet, dass der Drehzahlkorrekturwert $n_{add}$ umso größer ist, je weiter die Zwischenkreisspannung $U_{dc}$ den

EP 4 478 602 B1

Grenzwert $U_{dcmax}$ überschreitet. Dies entspricht einer Proportionalregelung. Zusätzlich kann der Drehzahlkorrekturwert $n_{add}$ umso größer sein, je länger die Abweichung besteht und/ oder je schneller die Zwischenkreisspannung $U_{dc}$ steigt. Um dies zu realisieren, kann der Stromwinkelregler 13 die Funktionalität eines PID-Reglers aufweisen.

Durch den Drehzahlkorrekturwert $n_{add}$ respektive das dadurch erreichte Vordrehen des Referenzstromraumzeigers wird ein negatives Moment minimiert, bestenfalls auch wieder in ein positives Moment geändert, das auf den Rotor 3 wirkt, so dass der weitere Anstieg der Zwischenkreisspannung verhindert und dieser somit geschützt wird.

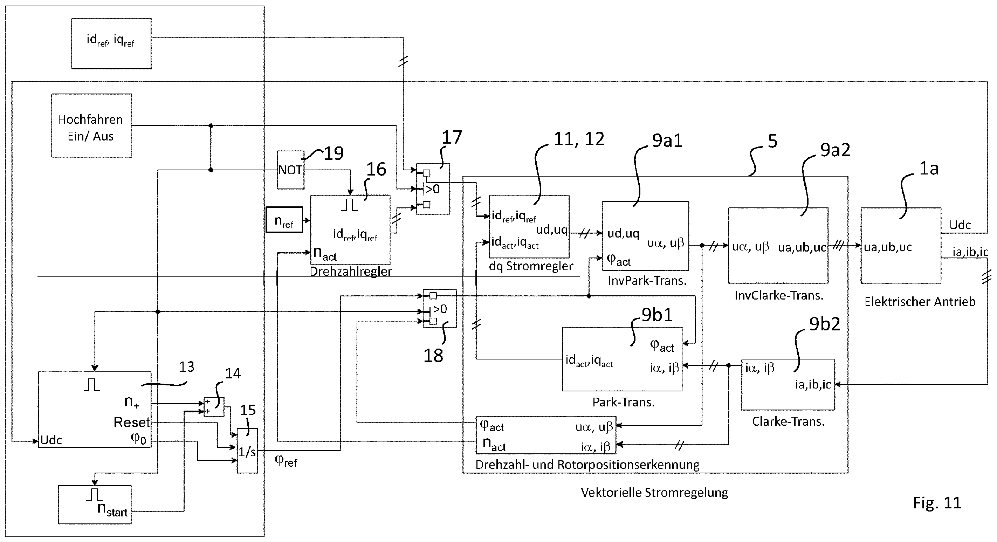

Figur 11 zeigt in einem Blockschaltbild eine detailliertere Darstellung der Implementierung des erfindungsgemäßen Verfahrens gemäß dem ersten Aspekt. Insbesondere sind hier Komponenten der vektoriellen Stromregelung 5 dargestellt. Ferner ist eine Umschaltung vom rein gesteuerten Hochlauf "Open Loop Betrieb" in den feldorientiert geregelten "Closed Loop Betrieb" (FOR Betrieb) in diesem Ausführungsbeispiel dargestellt.

Die vektorielle Stromregelung 5 erhält an einem Eingang die drei Phasenströme ia, ib, ic der Statorphasen des elektrischen Antriebs 1a bzw. der Synchronmaschine 1. Diese drei Phasenströme ia, ib, ic werden in Block 9b2 mit Hilfe der Clarke-Transformation in die Stromkomponenten i$\alpha$, i$\beta$ des statorbezogenen Bezugssystems, genauer gesagt des $\alpha\beta$-Koordinatensystems umgewandelt. Die Stromkomponenten i$\alpha$, i$\beta$ werden im feldorientiert geregelten Betrieb für die Bestimmung der aktuellen Rotorposition $\varphi_{act}$ und der aktuellen Drehzahl $n_{act}$ verwendet. Aus den Stromkomponenten i$\alpha$, i$\beta$ werden außerdem die Stromkomponenten id, iq des rotorbezogenen Bezugssystems, genauer gesagt des dq-Koordinatensystems ermittelt. Dies erfolgt mit Hilfe der Park-Transformation in Block 9b1. Hierfür wird entweder im Closed Loop Betrieb die aktuelle Rotorposition $\varphi_{act}$ verwendet, oder, da diese während des Hochlaufs unbekannt ist, im Open Loop Betrieb die Sollposition $\varphi_{ref}$ bzw. der Soll-Winkel $\varphi_{ref}$ für den Rotor verwendet.

Der Soll-Winkel $\varphi_{ref}$ stammt, wie in Bezug zur Figur 9 beschrieben, aus dem Integrator 15, der beim Hochlauf aktiviert ist und den vorgegebenen Drehzahlverlauf $n_{start}$ integriert, wobei Startwert der Integration der Startwinkel $\varphi_0$ ist, welcher derjenigen Position des Rotors 3 entspricht, in der der Rotor 3 zuvor geparkt wurde. Einfacherweise kann der Startwinkel $\varphi_0 = 0$ sein, so dass der Rotor auf der $\alpha$-Achse ausgerichtet bzw. geparkt ist. Wie ebenfalls in Bezug zur Figur 9 beschrieben, fügt ein Addierer 14 dem Drehzahlverlauf $n_{start}$ einen Drehzahlkorrekturwert n+ hinzu, der von einem Stromwinkelregler 13 bereitgestellt wird. In dem vorliegenden Beispiel wird auch der Startwinkel $\varphi_0$ von dem Stromwinkelregler 13 bereitgestellt. Die Festlegung des Drehzahlkorrekturwerts n+ durch den Stromwinkelregler 13 erfolgt ebenfalls wie in Bezug zum Beispiel in Figur 9 erläutert.

Die Regelungsstruktur in Figur 11 umfasst einen Drehzahlregler 16, der jedoch während des Hochlaufs nicht aktiv ist, und die ihn betreffenden Signalflüsse insoweit zunächst vernachlässigt werden können. Aktiviert wird der Hochlauf durch ein entsprechendes Aktivierungssignal "Hochfahren Ein", das in Figur 11 durch einen positiven Impuls veranschaulicht ist. Dieses Aktivierungssignal aktiviert und deaktiviert einzelne Komponenten der Regelungsstruktur und bewirkt eine Umschaltung zwischen Signalwegen. So werden der Stromwinkelregler 13 und die Drehzahlvorgabe $n_{start}$ aktiviert, der Drehzahlregler 16 deaktiviert. Letzteres erfolgt mittels eines Invertierers 19, der das Aktivierungssignal negiert. Das Aktivierungssignal wirkt außerdem auf einen ersten Umschalter 17, der zwischen einer Vorgabe der Sollwerte id$_{ref}$, iq$_{ref}$ für den id und iq-Strom aus dem Drehzahlregler 16 und einer davon separierten Vorgabe dieser Sollwerte id$_{ref}$, iq$_{ref}$ für den Hochlauf umschaltet. Für den Hochlauf können diese Sollwerte id$_{ref}$ = i$_{max}$ und iq$_{ref}$ = 0 sein, wie in Figur 5. Das Aktivierungssignal wirkt auch auf einen zweiten Umschalter 18, der zwischen der bekannten aktuellen, d.h. tatsächlichen Rotorposition $\varphi_{act}$, die im feldorientiert geregelten Betrieb verwendet wird, und der Soll-Rotorposition $\varphi_{ref}$ umschaltet, die beim Hochlauf verwendet wird. Die Umschalter 17, 18 sind in Figur 11 in der für den Hochlauf vorgesehenen Stellung dargestellt.

Der erste Stromregler 11 zur Einstellung des id-Stroms und der zweite Stromregler 12 zur Einstellung des iq-Stroms sind in der Darstellung in Figur 11 in einem dq-Stromregler 11, 12 funktional zusammengefasst. Dieser erhält einerseits die Sollwerte id$_{ref}$, iq$_{ref}$ für den id- und den iq-Strom und andererseits die Istwerte id$_{act}$, iq$_{act}$ des id- und iq-Stroms. Der dq-Stromregler 11, 12 berechnet daraus die zur Einstellung des durch die Strom-Sollwerte id$_{ref}$, iq$_{ref}$ definierten Referenzstromraumzeigers benötigen Spannungskomponenten ud, uq im dq-Koordinatensystem. Mittels einer anschließenden inversen Park-Transformation werden die Spannungskomponenten ud, uq in Block 9a1 unter Verwendung des Soll-Winkels $\varphi_{ref}$ des Rotors beim Hochlauf bzw. der aktuellen Rotorposition $\varphi_{act}$ während der feldorientierten Regelung im Normalbetrieb in die Spannungskomponenten u$\alpha$, uß im $\alpha\beta$-Koordinatensystem transformiert. Die Spannungskomponenten u$\alpha$, uß werden anschließend in Block 9a2 mittels der inversen Clarke-Transformation in die Phasenspannungen Ua, Ub, Uc umgewandelt, die am elektrischen Antrieb 1a eingestellt werden müssen, um den gewünschten Referenzstromraumzeiger einzustellen. Bei der feldorientierten Regelung im Normalbetrieb werden die Spannungskomponenten u$\alpha$, uß außerdem verwendet, um die aktuelle Drehzahl $n_{act}$ und die aktuelle Rotorpositon $\varphi_{act}$ zu bestimmen. Dies erfolgt in bekannter Weise.

Die Funktionsweise der in Figur 11 dargestellten Regelungsstruktur beim Hochlauf ist identisch zu derjenigen, die in Bezug zur Figur 10 erläutert wurde. Ist der Hochlauf abgeschlossen, d.h. eine vorgegebene Zieldrehzahl erreicht, wird in den feldorientiert geregelten Normalbetrieb umgeschaltet. Dies erfolgt, indem der Hochlauf durch ein entsprechendes Deaktivierungssignal "Hochfahren Aus" abgeschaltet wird. Das Deaktivierungssignal ist ein invertiertes Aktivierungssignal. Es deaktiviert den Stromwinkelregler 13 und die Drehzahlvorgabe $n_{start}$ und aktiviert den Drehzahlregler 16, der nun eine vorgegebene Soll-Drehzahl $n_{ref}$ einregelt und hierzu in Abhängigkeit der Istdrehzahl $n_{act}$ Sollwerte $id_{ref}$, $iq_{ref}$ für den id- und den iq-Strom vorgibt. Gleichzeitig schaltet das Deaktivierungssignal zum einen den ersten Umschalter 17 um, so dass der dq-Stromregler 11, 12 nunmehr die Sollwerte $id_{ref}$, $iq_{ref}$ für den id- und den iq-Strom vom Drehzahlregler 16 erhält, und zum anderen den zweiten Umschalter 18 um, so dass der Park- und der inversen Park-Transformation die aktuelle Rotorpositon $\varphi_{act}$ zugeführt wird. Durch die Aktivierung des Drehzahlreglers wird vom "Open Loop Betrieb" während des Hochlaufs in den "Closed Loop Betrieb" umgeschaltet.

Es sei hier noch einmal erwähnt, dass im Open Loop Betrieb das Drehmoment des Antriebs nicht geregelt wird, da die Rotorposition $\varphi_{act}$ nicht bekannt ist. Vielmehr entsteht das Drehmoment gerade aufgrund des unbekannten Winkels $\vartheta$ zwischen dem die tatsächliche Lage des Rotors beschreibenden $\delta\gamma$-Koordinatensystems und dem dq-Koordinatensystem, weshalb es gerade dazu kommen kann, dass das Drehmoment negativ wird und Energie in den Zwischenkreis zurückgespeist wird, wodurch die Zwischenkreisspannung $U_{dc}$ ansteigt.

In einer nicht dargestellten Ausführungsvariante, kann die Umschaltung zwischen einem ersten und zweiten Satz von Reglerparametern für den ersten und/ oder zweiten Regler 11, 12 gemäß dem zweiten Aspekt des erfindungsgemäßen Verfahrens, wie sie in Bezug auf die Figuren 5, 8a, 8b und 9 erläutert wurde, auch bei den Ausführungsvarianten in den Figuren 10 und 11 ergänzt werden, so dass der erste und zweite Aspekt des erfindungsgemäßen Verfahrens auch gleichzeitig Anwendung finden kann.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

**Patentansprüche**

1.  Verfahren zum positionsgeberlosen, drehzahlungeregelten Starten einer von einem Frequenzumrichter mit einem Spannungszwischenkreis gespeisten Synchronmaschine (1) mit einem permanentmagnetischen Rotor (3) und einem Stator (2), bei dem für einen gesteuerten Hochlauf der Synchronmaschine (1) eine vektorielle Stromregelung (5) mit wenigstens einem ersten, eine erste Stromkomponente (id) des Statorstroms einstellenden Stromregler (11) einen gemäß einem vorgegebenen, ansteigenden Drehzahlverlauf ($n_{start}$) rotierenden Referenzstromraumzeiger (I) einstellt, der einen zumindest durch einen Sollwert ($Id_{ref}$) des ersten Stromreglers (11) vorgegebenen Betrag und eine definierte Winkellage ($\varphi$) in einem mit dem Referenzstromraumzeiger (I) relativ zu einem ortsfesten Bezugssystem ($\alpha$, $\beta$) des Stators (2) rotierenden Koordinatensystem (d, q) besitzt, **dadurch gekennzeichnet, dass** die Zwischenkreisspannung ($U_{dc}$) des Spannungszwischenkreises während des Hochlaufs ermittelt und diese oder eine davon abgeleitete Größe mit einem Referenzwert ($U_{dcmax}$) verglichen wird, wobei ein Drehzahlkorrekturwert (n+) zu dem Drehzahlverlauf hinzuaddiert wird, wenn die Zwischenkreisspannung ($U_{dc}$) den Referenzwert ($U_{dcmax}$) übersteigt.

2.  Verfahren nach Anspruch 1, **dadurch gekennzeichnet, dass** der Drehzahlkorrekturwert (n+) nur dann hinzuaddiert wird, wenn gleichzeitig die Zwischenkreisspannung ($U_{dc}$) steigt oder in einem bestimmten Maß steigt.

3.  Verfahren nach Anspruch 1 oder 2, **dadurch gekennzeichnet, dass** die Abweichung der Zwischenkreisspannung ($U_{dc}$) vom Referenzwert ($U_{dcmax}$) ermittelt wird und der Drehzahlkorrekturwert (n+) umso größer ist, je höher die Abweichung ist.

4.  Verfahren nach einem der vorherigen Ansprüche, **dadurch gekennzeichnet, dass** die Abweichung der Zwischenkreisspannung ($U_{dc}$) vom Referenzwert ($U_{dcmax}$) ermittelt wird und der Drehzahlkorrekturwert (n+) umso größer ist, je länger die Abweichung besteht.

5.  Verfahren nach einem der vorherigen Ansprüche, **dadurch gekennzeichnet, dass** der Drehzahlkorrekturwert (n+) umso größer ist, je schneller die Zwischenkreisspannung steigt oder dass die Abweichung der Zwischenkreisspannung ($U_{dc}$) vom Referenzwert ($U_{dcmax}$) ermittelt wird und der Drehzahlkorrekturwert (n+) umso größer ist, je schneller die Abweichung steigt.

6. Verfahren nach einem der vorherigen Ansprüche, **dadurch gekennzeichnet, dass** vor dem Hochlauf eine Ausrichtung des Rotors (3) auf eine Zielposition erfolgt, indem die vektorielle Stromregelung (5) wenigstens mit dem ersten Stromregler (11) zumindest einen stationären Referenzstromraumzeiger (I) mit einer definierte Winkellage ($\varphi_0$) als Startposition für den Hochlauf bezogen auf das ortsfeste Bezugssystem ($\alpha$, $\beta$) einstellt.

7. Verfahren nach einem der vorherigen Ansprüche, **dadurch gekennzeichnet, dass** bei der Einstellung des Referenzstromraumzeigers (I) der Istwert ($Id_{act}$) der von dem ersten Stromregler (11) eingestellten ersten Stromkomponente (id) des Statorstroms oder eine vom Istwert der ersten Stromkomponente abhängige erste Größe ermittelt und der Istwert ($Id_{act}$) oder die erste Größe mit dem Sollwert ($id_{ref}$) des ersten Stromreglers (11) oder eine von diesem Sollwert ($id_{ref}$) abhängige zweite Größe verglichen wird, und für den ersten Stromregler (11) ein erster Satz (Set1) von Reglerparametern (Ki1, Kp1) verwendet wird, wenn der Istwert ($id_{act}$) oder die erste Größe über dem Sollwert ($id_{ref}$) oder über der zweiten Größe liegt, und ein zweiter Satz (Set2) von Reglerparametern (Ki2, Kp2) verwendet wird, wenn der Istwert ($id_{act}$) oder die erste Größe unter dem Sollwert ($id_{ref}$) oder unter der zweiten Größe liegt, wobei der erste Satz (Set1) von Reglerparametern (Ki1, Kp1) den Stromregler (11) derart parametriert, dass er schneller regelt, als in dem Fall, dass er mit dem zweiten Satz (Set2) von Reglerparametern (Ki2, Kp2) parametriert ist.

8. Verfahren zumindest nach Anspruch 7, **dadurch gekennzeichnet, dass** die Beurteilung, ob der Istwert ($id_{act}$) oder die erste Größe unter oder über dem Sollwert ($id_{ref}$) oder der zweiten Größe liegt, anhand einer Fehlerabweichung (e) zwischen dem Sollwert ($id_{ref}$) und dem Istwert ($id_{act}$), dem Sollwert ($id_{ref}$) und der ersten Größe, der zweiten Größe und dem Istwert ($id_{act}$) oder der zweiten Größe und der ersten Größe erfolgt, wobei für den ersten Stromregler (11) der erste Satz (Set1) von Reglerparametern (Ki1, Kp1) verwendet wird, wenn die Fehlerabweichung (e) negativ ist, und der zweite Satz (Set2) von Reglerparametern (Ki2, Kp2) verwendet wird, wenn die Fehlerabweichung (e) positiv ist.

9. Verfahren nach einem der vorherigen Ansprüche, **dadurch gekennzeichnet, dass** der Referenzstromraumzeiger (I) nur durch den ersten Stromregler (11) eingestellt wird, während ein Sollwert ($iq_{ref}$) für einen zweiten Stromregler (12), der eine zweite Stromkomponente (iq) des Referenzstromraumzeigers (I) einstellen kann, null ist.

10. Verfahren nach einem der vorherigen Ansprüche, **dadurch gekennzeichnet, dass** die vektorielle Stromregelung (5) den ersten, die erste Stromkomponente (id) einstellenden Stromregler (11) sowie einen zweiten, eine zweite Stromkomponente (iq) einstellenden Stromregler (12) aufweist, wobei der erste Stromregler (11) jener ist, der bei einer sich an den Hochlauf anschließenden feldorientierten Regelung der permanentmagnetischen Synchronmaschine im Normalbetrieb dazu bestimmt ist, eine id-Stromkomponente eines Statorstromraumzeigers einzustellen, während der zweite Stromregler (12) in dem Normalbetrieb dazu bestimmt ist, eine iq-Stromkomponente des Statorstromraumzeigers einzustellen.

11. Verfahren nach einem der vorherigen Ansprüche, **dadurch gekennzeichnet, dass** der Betrag des Referenzstromraumzeigers (I), insbesondere der Sollwert ($id_{ref}$) des ersten Stromreglers (11), dem maximal einstellbaren Strom ($I_{max}$) entspricht.

12. Verfahren zumindest nach Anspruch 7, **dadurch gekennzeichnet, dass** der erste Stromregler (11) ein P- oder PI-Regler ist oder aufweist, und die Reglerparameter (Ki1, Kp1, Ki2, Kp2) Verstärkungsfaktoren für einen Proportionalanteil des P-Reglers oder einen Proportional- und einen Integralanteil des PI-Reglers sind.

13. Verfahren zumindest nach Anspruch 7, **dadurch gekennzeichnet, dass** der erste Satz (Set1) von Reglerparametern (Ki1, Kp1) den ersten Stromregler (11) derart parametriert, dass ein den ersten Stromregler (11) umfassender, offener Regelkreis eine Übertragungsfunktion besitzt, die ein symmetrisches Optimum (SO) aufweist.

14. Verfahren zumindest nach Anspruch 7, **dadurch gekennzeichnet, dass** der zweite Satz (Set2) von Reglerparametern (Ki2, Kp2) den ersten Stromregler (11) derart parametriert, dass ein den ersten Stromregler (11) umfassender, geschlossener Regelkreis eine Übertragungsfunktion besitzt, die eine Zeitkonstante zwischen 5ms und 20ms aufweist.

15. Verfahren nach einem der vorherigen Ansprüche, **dadurch gekennzeichnet, dass** der Spannungszwischenkreis eine Zwischenkreiskapazität von weniger als 0,02 $\mu$F pro Watt Nennleistung des Umrichters besitzt.

**Claims**

1. Method for starting, without the use of a position encoder and without a closed loop speed control, a synchronous machine (1) supplied by a frequency converter with an intermediate voltage circuit, having a permanent magnet rotor (3) and a stator (2), in which, for an open loop controlled start-up of the synchronous machine (1), a vectorial current control (5) with at least one first current controller (11) setting a first current component (id) of the stator current sets a reference current space vector (I) in that it rotates according to a specified, rising speed curve ($n_{start}$), the reference current space vector (I) having a magnitude specified by at least one setpoint value ($Id_{ref}$) of the first current controller (11) and having a defined angular position ($\varphi$) in a coordinate system (d, q) that rotates together with the reference current space vector (I) relative to a fixed reference system ($\alpha$, $\beta$) of the stator (2), **characterised in that** the intermediate circuit voltage ($U_{dc}$) of the intermediate voltage circuit is determined during start-up and this entity, or an entity derived from it, is compared to a reference value ($U_{dcmax}$), wherein a speed correction value ($n_{+}$) is added to the speed curve when the intermediate circuit voltage ($U_{dc}$) exceeds the reference value ($U_{dcmax}$).

2. Method according to claim 1, **characterised in that** the speed correction value ($n_{+}$) is added only if, simultaneously, the intermediate circuit voltage ($U_{dc}$) increases or increases to a specified extent.

3. Method according to claim 1 or 2, **characterised in that** the deviation of the intermediate circuit voltage ($U_{dc}$) from the reference value ($U_{dcmax}$) is determined and the speed correction value ($n_{+}$) being larger, the larger the deviation is.

4. Method according to one of the preceding claims, **characterised in that** the deviation of the intermediate circuit voltage ($U_{dc}$) from the reference value ($U_{dcmax}$) is determined and the speed correction value (n+) being larger, the longer the deviation exists.

5. Method according to one of the preceding claims, **characterised in that** the speed correction value ($n_{+}$) is larger, the faster the intermediate circuit voltage increases, or **in that** the deviation of the intermediate circuit voltage ($U_{dc}$) from the reference value ($U_{dcmax}$) is determined and the speed correction value ($n_{+}$) is larger, the faster the deviation increases.

6. Method according to one of the preceding claims, **characterised in that** an alignment of the rotor (3) to a target position is performed before start-up, by means of the vectorial current control (5) with at least the first current controller (11) setting at least one stationary reference current space vector (I) with a defined angular position ($\varphi_0$) as the starting position for the start-up in relation to the fixed reference system ($\alpha$, $\beta$).

7. Method according to one of the preceding claims, **characterised in that,** when setting the reference current space vector (I), the actual value ($Id_{act}$) of the first current component (id) of the stator current set by the first current controller (11) or a first entity depending on the actual value of the first current component is determined and the actual value ($Id_{act}$) or the first entity is compared to the setpoint value ($id_{ref}$) of the first current controller (11) or a second entity depending on this setpoint value ($id_{ref}$), and a first set (Set1) of controller parameters (Ki1, Kp1) is used for the first current controller (11) if the actual value ($id_{act}$) or the first entity exceeds the setpoint value ($id_{ref}$) or the second entity, and a second set (Set2) of controller parameters (Ki2, Kp2) is used if the actual value ($id_{act}$) or the first entity falls below the setpoint value ($id_{ref}$) or the second entity, wherein the first set (Set1) of controller parameters (Ki1, Kp1) parametrises the current controller (11) **in that** it responds more quickly than in the case where it is parametrised with the second set (Set2) of controller parameters (Ki2, Kp2).

8. Method at least according to claim 7, **characterised in that** the evaluation whether the actual value ($id_{act}$) or the first entity is below or above the setpoint value ($id_{ref}$) or the second entity is performed based on an error deviation (e) between the setpoint value ($id_{ref}$) and the actual value ($id_{act}$), the setpoint value ($id_{ref}$) and the first entity, the second entity and the actual value ($id_{act}$) or the second entity and the first entity, wherein the first set (Set1) of controller parameters (Ki1, Kp1) is used for the first current controller (11) if the error deviation (e) is negative and the second set (Set2) of controller parameters (Ki2, Kp2) is used if the error deviation (e) is positive.

9. Method according to one of the preceding claims, **characterised in that** the reference current space vector (I) is set only by the first current controller (11) while a setpoint value ($iq_{ref}$) for a second current controller (12) that can set a second current component (iq) of the reference current space vector (I) is zero.

10. Method according to one of the preceding claims, **characterised in that** the vectorial current control (5) comprises the first current controller (11) setting the first current component (id) and a second current controller (12) setting a second current component (iq), wherein the first current controller (11) is the one that, during a field-oriented control of the permanent magnet synchronous machine following the start-up, is intended, in normal operation, to set an id-current component of a stator current space vector while the second current controller (12) is intended, in normal operation, to set an iq-current component of the stator current space vector.

11. Method according to one of the preceding claims, **characterised in that** the magnitude of the reference current space vector (I), notably the setpoint value ($id_{ref}$) of the first current controller (11), corresponds to the maximum current ($I_{max}$) that can be set.

12. Method at least according to claim 7, **characterised in that** the first current controller (11) is or has a P- or PI-controller and the controller parameters (Ki1, Kp1, Ki2, Kp2) are amplification factors for a proportional component of the P-controller or for a proportional and an integral component of the PI-controller.

13. Method at least according to claim 7, **characterised in that** the first set (Set1) of controller parameters (Ki1, Kp1) parametrises the first current controller (11) in that an open control loop comprising the first current controller (11) has a transfer function having a symmetrical optimum (SO).

14. Method at least according to claim 7, **characterised in that** the second set (Set2) of controller parameters (Ki2, Kp2) parametrises the first current controller (11) **in that** a closed control loop comprising the first current controller (11) has a transfer function having a time constant between 5ms and 20ms.

15. Method according to one of the preceding claims, **characterised in that** the intermediate voltage circuit having an intermediate circuit capacity of less than 0.02 $\mu$F per watt rated power of the converter.

## Revendications

1. Procédé pour un démarrage sans capteur de position et sans contrôle en boucle fermée de la vitesse de rotation d'une machine synchrone (1) alimentée par un convertisseur de fréquence avec un circuit intermédiaire de tension, comportant un rotor à aimant permanent (3) et un stator (2), dans lequel, pour un démarrage contrôlé en boucle ouverte de la machine synchrone (1), une régulation vectorielle du courant (5) avec au moins un premier régulateur de courant (11) réglant une première composante de courant (id) du courant du stator règle un pointeur spatial de courant de référence (I) tournant selon une courbe de vitesse de rotation croissante prédéfinie ($n_{start}$), qui est réglé à une valeur prédéfinie ($Id_{ref}$) du premier régulateur de courant (11) et une position angulaire définie ($\varphi$) dans un système de coordonnées (d, q) tournant avec le pointeur spatial de courant de référence (I) par rapport à un système de référence fixe ($\alpha$, $\beta$) du stator (2), **caractérisé en ce que** la tension du circuit intermédiaire ($U_{dc}$) du circuit intermédiaire de tension est déterminée pendant la montée en régime et cette grandeur ou une grandeur dérivée de celle-ci est comparée à une valeur de référence ($U_{dcmax}$), une valeur de correction de vitesse de rotation (n+) étant ajoutée à la courbe de vitesse de rotation lorsque la tension du circuit intermédiaire ($U_{dc}$) dépasse la valeur de référence ($U_{dcmax}$).

2. Procédé selon la revendication 1, **caractérisé en ce que** la valeur de correction de vitesse de rotation ($n_+$) n'est ajoutée que si la tension du circuit intermédiaire ($U_{dc}$) augmente simultanément ou dans une certaine mesure.

3. Procédé selon la revendication 1 ou 2, **caractérisé en ce que** l'écart de la tension du circuit intermédiaire ($U_{dc}$) par rapport à la valeur de référence ($U_{dcmax}$) est déterminé et la valeur de correction de vitesse de rotation ($n_+$) est d'autant plus grande que l'écart est élevé.

4. Procédé selon l'une des revendications précédentes, **caractérisé en ce que** l'écart de la tension du circuit intermédiaire ($U_{dc}$) par rapport à la valeur de référence ($U_{dcmax}$) est déterminé et la valeur de correction de vitesse de rotation ($n_+$) est d'autant plus grande que l'écart dure longtemps.

5. Procédé selon l'une des revendications précédentes, **caractérisé en ce que** la valeur de correction de vitesse de rotation ($n_+$) est d'autant plus grande que la tension du circuit intermédiaire augmente rapidement ou que l'écart de la tension du circuit intermédiaire ($U_{dc}$) par rapport à la valeur de référence ($U_{dcmax}$) est déterminé et que la valeur de correction de vitesse de rotation ($n_+$) est d'autant plus grande que l'écart augmente rapidement.

6. Procédé selon l'une des revendications précédentes, **caractérisé en ce qu'**avant la montée en régime, on effectue un alignement du rotor (3) sur une position cible, **en ce que** la régulation vectorielle du courant (5) règle au moins avec le premier régulateur de courant (11) au moins un pointeur spatial de courant de référence stationnaire (I) avec une position angulaire définie ($\varphi_0$) comme position de départ pour la montée en régime par rapport au système de référence fixe ($\alpha$, $\beta$).

7.  Procédé selon l'une des revendications précédentes, **caractérisé en ce que,** lors du réglage du pointeur spatial de courant de référence (I), on détermine la valeur réelle ($Id_{act}$) de la première composante de courant (id) du courant du stator réglée par le premier régulateur de courant (11) ou une première grandeur dépendant de la valeur réelle de la première composante de courant et on compare la valeur réelle ($Id_{act}$) ou la première grandeur à la valeur nominale ($id_{ref}$) du premier régulateur de courant (11) ou une seconde grandeur dépendant de cette valeur nominale ($id_{ref}$), et pour le premier régulateur de courant (11), un premier jeu (Set1) de paramètres de régulateur (Ki1, Kp1) est utilisé lorsque la valeur réelle ($id_{act}$) ou la première grandeur est supérieure à la valeur nominale ($id_{ref}$) ou à la seconde grandeur, et un second jeu (Set2) de paramètres de régulation (Ki2, Kp2) est utilisé lorsque la valeur réelle ($id_{act}$) ou la première grandeur est inférieure à la valeur nominale ($id_{ref}$) ou à la seconde grandeur, le premier jeu (Set1) de paramètres de régulation (Ki1, Kp1) paramétrant le régulateur de courant (11) de telle sorte qu'il régule plus rapidement que dans le cas où il est paramétré avec le second jeu (Set2) de paramètres de régulation (Ki2, Kp2).

8.  Procédé selon au moins la revendication 7, **caractérisé en ce que** l'appréciation du fait que la valeur réelle ($id_{act}$) ou la première grandeur est inférieure ou supérieure à la valeur nominale ($id_{ref}$) ou à la seconde grandeur se fait à l'aide d'un écart d'erreur (e) entre la valeur nominale ($id_{ref}$) et la valeur réelle ($id_{act}$), la valeur nominale ($id_{ref}$) et la première grandeur, la seconde grandeur et la valeur réelle ($id_{act}$) ou la seconde grandeur et la première grandeur, le premier jeu (Set1) de paramètres de régulation (Ki1, Kp1) étant utilisé pour le premier régulateur de courant (11) lorsque l'écart d'erreur (e) est négatif et le second jeu (Set2) de paramètres de régulation (Ki2, Kp2) étant utilisé lorsque l'écart d'erreur (e) est positif.

9.  Procédé selon l'une des revendications précédentes, **caractérisé en ce que** le pointeur spatial de courant de référence (I) est réglé uniquement par le premier régulateur de courant (11), tandis qu'une valeur nominale ($iq_{ref}$) pour un second régulateur de courant (12), qui peut régler une seconde composante de courant (iq) du pointeur spatial de courant de référence (I), est nulle.

10. Procédé selon l'une des revendications précédentes, **caractérisé en ce que** la régulation vectorielle du courant (5) comprend le premier régulateur de courant (11) ajustant la première composante de courant (id) ainsi qu'un second régulateur de courant (12) ajustant une seconde composante de courant (iq), le premier régulateur de courant (11) étant celui, qui, lors d'une régulation orientée champ de la machine synchrone à aimants permanents faisant suite à la montée en régime, est destiné, en fonctionnement normal, à régler une composante de courant id d'un pointeur spatial de courant du stator, tandis que le second régulateur de courant (12) est destiné, en fonctionnement normal, à régler une composante de courant iq du pointeur spatial de courant du stator.

11. Procédé selon l'une des revendications précédentes, **caractérisé en ce que** la valeur absolue du pointeur spatial de courant de référence (I), notamment la valeur nominale ($id_{ref}$) du premier régulateur de courant (11), correspond au courant maximal réglable ($I_{max}$).

12. Procédé selon au moins la revendication 7, **caractérisé en ce que** le premier régulateur de courant (11) est ou comporte un régulateur P ou PI, et les paramètres de régulateur (Ki1, Kp1, Ki2, Kp2) sont des facteurs d'amplification pour une partie proportionnelle du régulateur P ou une partie proportionnelle et une partie intégrale du régulateur PI.

13. Procédé selon au moins la revendication 7, **caractérisé en ce que** le premier jeu (Set1) de paramètres de régulation (Ki1, Kp1) paramètre le premier régulateur de courant (11) de telle sorte qu'un circuit de régulation ouvert comprenant le premier régulateur de courant (11) possède une fonction de transfert présentant un optimum symétrique (SO).

14. Procédé selon au moins la revendication 7, **caractérisé en ce que** le second jeu (Set2) de paramètres de régulation (Ki2, Kp2) paramètre le premier régulateur de courant (11) de telle sorte qu'un circuit de régulation fermé comprenant le premier régulateur de courant (11) possède une fonction de transfert présentant une constante de temps comprise entre 5 ms et 20 ms

15. Procédé selon l'une des revendications précédentes, **caractérisé en ce que** le circuit intermédiaire de tension a une capacité de circuit intermédiaire inférieure à 0,02 $\mu$F par watt de puissance nominale du convertisseur.

Fig. 2

Fig. 1

Rotorposition [π/p]

$K_{R5}$

$K_{R4}$

$K_{R3}$

$K_{R2}$

$K_{R1}$

Zeit [s]

1,0  0,8  0,6  0,4  0,2  0,0  -0,2  -0,4  -0,6  -0,8  -1,0

0,09  0,12  0,15  0,18  0,21  0,24  0,27  0,30  0,33  0,36  0,39  0,42  0,45  0,48  0,51  0,54  0,57  0,60

Fig. 3

Statorstrom [I/Imax]

Zeit [s]

$I_{ref}$

$K_{I1}$  $K_{I2}$  $K_{I3}$  $K_{I4}$

$K_{I5}$

0,3
0,25
0,20
0,15
0,10
0,05
0,0
-0,05
-0,10

0,09  0,12  0,15  0,18  0,21  0,24  0,27  0,30  0,33  0,36  0,39  0,42  0,45  0,48  0,51  0,54  0,57  0,60

Fig. 4

Fig. 5

EP 4 478 602 B1

Fig. 6

EP 4 478 602 B1

Fig. 7

EP 4 478 602 B1

Fig. 8a

EP 4 478 602 B1

Fig. 8b

Fig. 9

Fig. 10

Elektrischer Antrieb

Udc

Spannung

Strom

ia, ib

ic

1a

Vektorielle Stromregelung

$\varphi_{ref}$

$id_{ref}$, $iq_{ref}$

ua, ub, uc

ia, ib, ic

5

Rotorsollposition

$id_{ref}$, $iq_{ref}$

Stromsollwert

$\frac{1}{s}$

15

14

13

Stromwinkelregler

Udc

$n_{add}$

$U_{dcmax}$

$n_{start}$

Drehzahlsollwertrampe

$\varphi_0 = 0$

Startposition

27

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2591993 A1

**In der Beschreibung aufgeführte Nicht-Patentliteratur**

- Elektrische Antriebe/ Dierk Schröder. Springer Verlag, 2001, vol. 2